# EUROPEAN PATENT SPECIFICATION

(11) **EP 2 370 503 B1**
(45) Date of publication and mention of the grant of the patent: **08.11.2017**
(21) Application number: 09764969.3
(22) Date of filing: 03.12.2009
(51) Int. Cl.: C09D 103/02, D21H 19/54, C08J 3/12, C08B 31/00, C08K 3/22, C08L 3/02, B29B 7/42, B29K 105/16, B29C 47/00, B29C 47/10, B29C 47/36, B29C 47/40, B29C 47/60, B29C 47/62, B29C 47/92, C09D 1/00

(54) **PROCESS FOR PRODUCING BIOPOLYMER NANOPARTICLE BIOLATEX COMPOSITIONS HAVING ENHANCED PERFORMANCE AND COMPOSITIONS BASED THEREON**
VERFAHREN ZUR HERSTELLUNG VON BIOPOLYMERNANOPARTIKEL ENTHALTENDEN BIOLATEXZUSAMMENSETZUNGEN MIT VERBESSERTER LEISTUNGSFÄHIGKEIT UND DARAUF BASIERENDE ZUSAMMENSETZUNGEN
PROCÉDÉ DE FABRICATION DE COMPOSITIONS DE BIOLATEX À BASE DE NANOPARTICULES DE BIOPOLYMÈRE PRÉSENTANT DES PERFORMANCES AMÉLIORÉES ET COMPOSITIONS FONDÉES SUR CELUI-CI

(30) Priority: 03.12.2008 US 119602 P
(43) Date of publication of application: 05.10.2011
(73) Proprietor: EcoSynthetix Ltd., Lansing, MI 48910 (US)
(72) Inventor: BLOEMBERGEN, Steven, Okemos MI 48864 (US); LEE, Do, I., Midland MI 48640 (US); MCLENNAN, Ian, J., Lansing MI 48933 (US); WILDI, Robert, H., Parkersburg WV 26104 (US); VAN EGDOM, Edward, Lansing MI 49810 (US)
(74) Representative: Ellens, Andries
(86) International application number: PCT/US2009/066599
(87) International publication number: WO 2010/065750

(56) References cited:
- WO-A1-00/69916
- WO-A1-2004/074367

## Description

### FIELD OF THE INVENTION

This invention relates to a process for producing novel biopolymer conjugates (also referred to as "biolatex™ conjugate") and compositions based thereon that have been produced by co-extrusion with at least one additive to yield new biolatex conjugates compositions that exhibit enhanced performance for use on coated paper and paperboard, and other applications.

### BACKGROUND OF THE INVENTION

U.S. Patent No. 6,755,915 (which corresponds to WO 00/40617) describes a method for the preparation of starch particles which involves a) preparation of a first phase comprising a dispersion of starch granules in water, b) preparation of a dispersion or emulsion of the first phase in a second nonaqueous liquid phase, c) crosslinking of the starch present in the first phase, and d) separating the starch particles thus formed. In one aspect of the invention, an oil-in-water emulsion may be inverted to a water-in-oil emulsion.

U.S. Patent No. 6,677,386 (which corresponds to WO 00/69916) describes a process for producing biopolymer nanoparticles, which in one form are starch nanoparticles. In the process, the biopolymer is plasticized using shear forces, and a crosslinking agent is added during the processing. After the processing, the biopolymer nanoparticles can be dispersed in an aqueous medium. One version of the process results in starch nanoparticles which are characterized by an average particle size of less than 400 nanometers. The nanoparticles can be used as a matrix material wherein the matrix material may be a film-forming material, a thickener, a rheology modifier, an adhesive or an adhesive additive (tackifier). The nanoparticles or dispersions thereof may also be used for their barrier properties, as a carrier, fat replacer or medicament for mitigating dermal disorders. Further examples of applications for the nanoparticles or dispersions thereof are in the paper-making and packaging industry, agriculture and horticulture fields. The nanoparticles can also be used as excipients or carriers in medicines, where they may be complexed or covalently coupled to active substances such as slow-release drugs. The nanoparticles can also be processed into a foam at relatively high density.

Other uses of the nanoparticles of U.S. Patent No. 6,667,386 can be found in: (i) U.S. Patent No. 7,160,420 which describes the use of the starch nanoparticles as a wet-end additive in papermaking pulp slurry, or applied to the surface of the paper as a surface sizing agent; (ii) U.S. Patent No. 6,825,252 which describes the use of the starch nanoparticles in a binder in a pigmented paper coating composition; (iii) U.S. Patent No. 6,921,430 which describes the use of the starch nanoparticles in environmentally friendly adhesives; and (iv) U.S. Patent Application Publication No. 2004/0241382 which describes the use of the starch nanoparticles in an adhesive for producing corrugated board. The disclosure of these patents and applications, and of all other publications referred to herein, are incorporated by reference as if fully set forth herein.

The invention in U.S. Patent No. 6,667,386 relates to a process for producing biopolymer nanoparticles which in one form are starch nanoparticles characterized by an average particle size of less than 400 nanometers. This invention does not anticipate, consider nor provide any motivation to add the performance enhancing additives, as in the current invention, nor does it anticipate performance advantages that might result from producing novel biolatex conjugates. This is clearly confirmed in the first sentence of the 6,667,386 patent (as well as the remainder of the patent), where it states: "The invention relates to a process for producing nanoparticles, i.e. particles essentially consisting of a biopolymer such as starch. The invention also relates to nanoparticles obtainable by such a process."

Thus, it can be seen that the nanoparticles prepared by the process of U.S. Patent No. 6,667,386 have numerous uses. PCT International Patent Application Publication No. WO 2008/022127 A2 describes a process for producing biopolymer nanoparticles, an improved process for producing larger quantities of biopolymer nanoparticles and in particular, starch nanoparticles.

The application of the biopolymer nanoparticle-based biolatex binders of U.S. Patent No. 6,667,836 in coated paper and paperboard was recently described in a technical article by Bloembergen et al., entitled "Paper binder performance with biobased nanoparticles. A starch-based biolatex can replace petroleum-based latex binders in papermaking", Paper 360°Magazine, Sept. 2008. The biolatex binder provides a high performance substitute to the petrochemical-based binders used in coated paper and paperboard manufacturing processes at a lower cost per pound. Carboxylated styrene butadiene (SB latex) and styrene acrylate (SA latex) are the dominant petrochemical-based binders used in coated paper and paperboard manufacturing.

Currently, the industry consumes over 4 billion pounds of SB and SA latex per annum. As the price of oil continues to escalate, and as the price of synthetic binders has increased by more than 100% over the past few years, paper producers have faced increased production costs forcing them to find efficiencies, pass increases on to the consumer, or cease production.

The biolatex binder of U.S. Patent No. 6,667,836 provides performance that is comparable to SB and SA latex for important paper properties such as coating gloss, brightness, whiteness, fluorescence, ink gloss, and printability, while providing superior performance to SB and SA Latex for water retention, opacity, dry pick, print mottle, porosity (blister resistance) and paper stiffness. However, the biopolymer nanoparticles invention of U.S. Patent No. 6,667,836 does not anticipate, consider nor provide any motivation to add the performance-enhancing additives, as in the current invention, nor does it anticipate the significant performance advantages that might result from producing novel biolatex conjugates.

Brightness and whiteness are among the most valued paper and paperboard properties. Different commercial product grades have varying specifications for brightness and whiteness that are largely controlled by the paper and paperboard coating recipe and to a lesser extent by the fiber furnish (raw stock) and the specific manufacturing conditions. Given the use of various pigments and other additives in the coating color formulation, titanium dioxide and optical brightening agents (OBAs) are the two single most important additives in the coating formulation used to achieve paper and paperboard products with high brightness and whiteness levels. Cellulose, pulp and lignin naturally absorb blue light and therefore are yellowish in color and impart a dull appearance to paper.

Optical brightening agents are generally fluorescent dyes that compensate for the absorption of blue light by absorbing light in the ultraviolet and violet region (usually 340-370 nm) and re-emitting light in the blue region (typically 420-470 nm). For brightening paper, the optical brightening agents used are typically based on stilbene chemistry [See D. A. W. Williams & A. K Sarkur, "Optical Whitening Agents," U.S. Patent 2,875,106, 1959].

Titanium dioxide (TiO₂) is an ultra-white pigment that is used in many paper and paperboard applications, as well as in the plastics, food, drug, cosmetic and other industries. There are many commercial applications and examples in the open and patent literature of paper and paperboard coating recipes that combine the use of some or all of: (a) various pigments (including ground calcium carbonate (GCC) and clays), (b) titanium dioxide, (c) OBAs, (d) binders (such as synthetic SB and SA latex binders), and (e) co-binders such as water soluble industrial starches (including reduced molecular weight ethylated, acid thinned, phosphorylated and enzymatically treated starches) and proteins (such as soy protein) in paper and paperboard coating formulations.

The optimum or highest level of brightness and whiteness that can be attained with these coating recipes is a delicate balance between the levels of titanium dioxide and OBA used in the coating formulation. Increasing levels of titanium dioxide increase brightness and whiteness, but levels above about 2 to 5% can begin to quench fluorescence contributions from the optical brightening agent such that brightness levels with UV light are effectively reduced. Given that the fluorescence and brightness-with-UV are key performance features of higher brightness paper and paperboard grades, the level of titanium dioxide and optical brightening agents used in the coating recipe must be carefully optimized and controlled. Once the level of titanium dioxide is further increased, the effective use level of OBA is essentially exceeded and optimum brightness and whiteness levels can no longer be attained. This limitation regarding TiO₂'s effect on brightness is well known to those skilled in the art.

Titanium dioxide (TiO₂) is widely used as a brightening and opacifying additive because the TiO₂ particles scatter light to provide an ultra-white appearance with enhanced opacity. It is well known to those skilled in the art that increasing the concentration of TiO₂ particles does not increase brightness levels proportionally for paper and paperboard products. This is because the ability of TiO₂ particles to scatter light (the "scattering efficiency") is reduced at increasing concentration levels due to "crowding" of the particles [see J. Broun, "Crowding and Spacing of Titanium Dioxide Pigments," J. Coatings Tech, Vol. 60, No. 758, 67-70, 1988]. As a result, there exists a long felt, unmet need for a method and composition that increases the brightness levels by overcoming the "crowding" of TiO₂ particles.

U.S. Patent No. 5,571,334 describes a starch-based opacifying agent for application in the food, drug and cosmetic industries that combines a cooked starch with titanium dioxide. The invention describes the preparation of a viscous soluble starch solution or "complexation" that helps to reduce settlement of the titanium dioxide particles used at levels of 5 to 50% based on starch to provide the desired opacity. No particle separation is expected to occur under the condition of combining a soluble starch with suspended TiO₂ particles.

The ability to separate TiO₂ particles and increase scattering efficiency is not readily feasible with synthetic binders, because the production of such latex emulsions via an emulsion polymerization process does not lend itself to producing stable colloid particles that incorporate the titanium dioxide.

Thus, there is a need for improved coating compositions that exhibit enhanced performance for coated paper and paperboard, and other applications including but not limited to the decorative paints and coatings, food, drug and cosmetic industries.

### SUMMARY OF THE INVENTION

In one embodiment, the present invention provides a process for producing a biolatex conjugate composition, the process comprising feeding biopolymer feedstock, at least one plasticizer and at least one additive to a feed zone of an extruder having a screw configuration such that the biopolymer feedstock, the plasticizer and the at least one additive are processed under shear forces in the extruder to form a biopolymer-additive complex; and adding a crosslinking agent to the biopolymer-additive complex, thereby producing a biolatex conjugate composition. In one embodiment, the biopolymer feedstock, the at least one additive, and the at least one plasticizer are added separately to the feed zone of the extruder.

In one embodiment, the biopolymer feedstock is selected from the group consisting of carbohydrate, starch and protein.

In one embodiment, the at least one additive is selected from the group consisting of titanium dioxide, aluminum oxide, aluminum trihydrate, sodium aluminum phosphate, aluminum phosphate, sodium aluminum magnesium silicate, fly ash, zeolite, sodium aluminum silicate, talc, clay, delaminated clay, calcined kaolin clay, montmorillonite clay, nanoclay, silica particles, zinc oxide, calcium carbonate, optical brightening agents, biocides, stabilizers, and combinations thereof.

In one embodiment, the at least one additive is fed to the extruder at a weight percentage from about 0.1% to about 10% by weight based on weight of the composition. In one embodiment, the at least one additive is fed to the extruder at a weight percentage of less than about 5% by weight based on weight of the composition.

In one embodiment, the at least one additive comprises titanium dioxide, wherein the titanium dioxide is a hydrophilic- or hydrophobically-modified particulate product in a powder or a liquid dispersion. The titanium dioxide may be selected from the group consisting of rutile, anatase or brookite titanium dioxide and may have an average particle size of less than about 0.5-1.0 micron.

In one embodiment, the at least one plasticizer is selected from the group consisting of water, alcohols, glycerol, ethyleneglycol, propyleneglycol, polyglycols, sugar alcohols, urea, citric acid, citric acid esters, and mixtures thereof.

In one embodiment, the crosslinking agent is selected from the group consisting of dialdehydes, polyaldehydes, acid anhydrides, mixed anhydrides, glutaraldehyde, glyoxal, oxidized carbohydrates, periodate-oxidized carbohydrates, epichlorohydrin, epoxides, triphosphates, petroleum-based monomeric, oligomeric and polymeric crosslinkers, biopolymer crosslinkers, and divinyl sulphone.

In one embodiment, the biopolymer portion of the biopolymer-additive complex has an average particle size of less than about 400 nanometers; in another embodiment, the biopolymer portion of the biopolymer-additive complex has an average particle size of about 100 nanometers or less.

In one embodiment, the biopolymer conjugate composition increases whiteness and brightness in a coating composition for paper and paperboard products, and the production rate of the biolatex conjugate composition is greater than or equal to 1.0-3.0 metric tons per hour of product.

In one embodiment, the biolatex conjugate composition of the present invention is prepared according to the process of claim 1. In an embodiment, the biolatex conjugate composition comprises a biopolymer-additive complex reacted with a crosslinking agent, as further defined in the accompanying claims.

In another embodiment, the biolatex conjugate composition comprises a biopolymer-additive complex reacted with a crosslinking agent, wherein the biopolymer-additive complex comprises biopolymer feedstock, a plasticizer and at least one additive. In one embodiment, the biopolymer-additive complex is prepared by co-extruding a biopolymer feedstock, a plasticizer, and at least one additive under shear forces.

In one embodiment, the at least one additive is titanium dioxide, although the additive may also include aluminum oxide, aluminum trihydrate, sodium aluminum phosphate, aluminum phosphate, sodium aluminum magnesium silicate, fly ash, zeolite, sodium aluminum silicate, talc, clay, delaminated clay, calcined kaolin clay, montmorillonite clay, nanoclay, silica particles, zinc oxide, calcium carbonate, optical brightening agents, biocides, stabilizers, and combinations thereof. For instance, in one embodiment, the at least one additive comprises titanium dioxide and an optical brightening agent such as stilbene.

A product is described comprising a substrate having a surface; and a coating formulation comprising a composition comprising a biopolymer-additive complex reacted with a crosslinking agent. The substrate may be selected from the group consisting of paper and paperboard.

A method is described for manufacturing a paper product, the method comprising applying a coating formulation comprising a composition comprising a biopolymer-additive complex reacted with a crosslinking agent to a surface of a paper substrate, wherein the paper substrate is selected from the group consisting of paper and paperboard. In one embodiment, the biolatex conjugate composition replaces all or part of a petroleum-based binder that would otherwise be used in a paper coating formulation.

While multiple embodiments are disclosed, still other embodiments of the present invention will become apparent to those skilled in the art from the following detailed description. As will be apparent, the invention is capable of modifications in various obvious aspects, all without departing from the spirit and scope of the present invention. These and other features, aspects, and advantages of the present invention will become better understood upon consideration of the following detailed description, drawings and appended claims. Accordingly, the detailed descriptions are to be regarded as illustrative in nature and not restrictive.

### BRIEF DESCRIPTION OF THE DRAWINGS

Figure 1 is a schematic of an example apparatus suitable for use in the process of the invention.
Figure 2 is a schematic of a packaging system suitable for use in the process of the invention.
Figure 3 shows various screw configurations used in the Examples below that serve to illustrate the invention.
Figure 4 is a bar chart illustrating the percent Gloss target of 72% was attained for all five coated and calendered paper samples per Example 11, in which "MD" stands for Machine Direction and "CD" stands for Cross Direction of the % Gloss measurement on the coated, dried and calendered paper samples.
Figure 5 is a bar chart illustrating the percent Brightness with and without UV for all five coated and calendered paper samples per Example 11.
Figure 6 is a bar chart illustrating the percent CIE (Lab) Whiteness for all five coated and calendered paper samples per Example 11.

### DETAILED DESCRIPTION OF THE INVENTION

This invention provides novel biolatex conjugate compositions and methods of production and use thereof.

### I. In General

In the specification and in the claims, the terms "including" and "comprising" are open-ended terms and should be interpreted to mean "including, but not limited to ... ". These terms encompass the more restrictive terms "consisting essentially of" and "consisting of"

As used herein and in the appended claims, the singular forms "a", "an", and "the" include plural reference unless the context clearly dictates otherwise. As well, the terms "a" (or "an"), "one or more" and "at least one" can be used interchangeably herein. It is also to be noted that the terms "comprising", "including", "characterized by" and "having" can be used interchangeably.

Unless defined otherwise, all technical and scientific terms used herein have the same meanings as commonly understood by one of ordinary skill in the art to which this invention belongs. All publications and patents specifically mentioned herein are incorporated by reference in their entirety for all purposes including describing and disclosing the chemicals, instruments, statistical analyses and methodologies which are reported in the publications which might be used in connection with the invention. All references cited in this specification are to be taken as indicative of the level of skill in the art. Nothing herein is to be construed as an admission that the invention is not entitled to antedate such disclosure by virtue of prior invention.

### II. The Invention.

This invention provides novel biolatex conjugate compositions and methods of production and use thereof. The novel compositions are prepared by co-extruding a biopolymer feedstock, at least one additive and at least one plasticizer under shear forces to yield a biopolymer-additive complex, and adding a crosslinking agent to the biopolymer-additive complex to produce the biolatex conjugate compositions of the present invention.

### A. Biolatex Conjugate Composition.

The invention provides a novel composition comprising, in one embodiment, a biolatex™ conjugate comprising a biopolymer feedstock processed under shear forces with at least one plasticizer and at least one additive to form a biopolymer-additive complex, and adding a crosslinking agent to the biopolymer-additive complex to produce the novel biolatex conjugate compositions of the present invention. Thus, in one embodiment, the invention provides a novel biolatex conjugate composition comprising a biopolymer-additive complex reacted with a crosslinking agent.

By "biolatex™ conjugate" we mean biopolymer-additive complex reacted with the crosslinking agent under shear forces wherein the biopolymer portion of the biopolymer-additive complex has, in one embodiment, an average particle size of less than 400 nm. The biopolymer-additive complexes are further manipulated in many ways, as described throughout, to form the novel biolatex™ conjugates. For convenience, the trademark symbol™ is not used in every instance of biolatex™. However, we intend that the biolatex™ be used as an adjective to describe biopolymer nanoparticles and the novel biopolymer-additive/crosslinker conjugates of the present invention.

By "biopolymer" we mean biopolymers such as starch and carbohydrates or other polysaccharides including cellulose, hemicellulose and gums, as well as proteins (e.g. gelatin or whey protein) that can be formed into nanoparticles. The biopolymers may be previously modified, e.g. with cationic groups, carboxymethyl groups, by acylation, phosphorylation, hydroxyalkylation, oxidation and the like. Starch and mixtures of starch with other (bio)polymers containing at least 50% starch are preferred. Especially preferred is high-amylopectin starch such as low-amylose starch, i.e. starch having a content of at least 75%, especially at least 90% of amylopectin, such as waxy starch. The biopolymer preferably has a dry substance content of at least 50%, especially at least 60% by weight at the time when processing starts.

By "processed under shear forces" we mean a mechanical treatment, such as extrusion treatment, performed at elevated temperature (above 40°C-60°C, below the degradation point of the polymer, up to e.g. 140°C-200°C) under conditions of high shear. The shear can be affected by applying at least 100 Joules of specific mechanical energy (SME) per gram of biopolymer. By processing the biopolymer feedstock under shear forces, nanoparticles containing virtually no biopolymer granules or fragments of granules (i.e., non-crystalline nanoparticles) are formed.

By co-extruding at least one additive and at least one plasticizer with the biopolymer feedstock under shear forces, a biopolymer-additive complex is formed. By further co-extruding at least one crosslinking agent with the biopolymer-additive complex, the novel biolatex conjugate composition of the present invention is formed.

By "biolatex conjugate," we mean the biopolymer-additive complex reacted with at least one crosslinking agent under shear forces. The biolatex conjugate therefore comprises biopolymer nanoparticles bonded to the at least one additive via physical or chemical bond between the at least one additive and the biopolymer nanoparticles. The bond(s) between the at least one additive and the biopolymer nanoparticles generally increases the stability of the biolatex conjugate and results in the "spreading out" or more even distribution of the additive particles by increasing the spacing between the additive particles.

Thus, novel biopolymer-additive/crosslinker conjugates ("biolatex conjugates") are produced in a reactive extrusion process that involves feeding the biopolymer feedstock, at least one plasticizer, and one or more performance-enhancing additives, converting the biopolymer raw material feedstock into a continuous thermoplastic melt phase (starch-plasticizer-additive) which is feasible only because of the high degree of mixing under high shear conditions to produce a gel-like product to the extent that any native (crystalline, granular) structure is completely removed. Subsequently through the addition of a crosslinker downstream of the feedzone, this continuous thermoplastic biopolymer melt phase then forms the biolatex conjugates consisting of aggregates of biopolymer nanoparticles and the additive(s) (the "biopolymer-additive complex"). The crosslinker provides the internal high molecular weight structure that prevents the biopolymer-additive complex from dissolving when they are dispersed into water, thus forming the novel biolatex conjugate composition of the present invention. Accordingly, the biolatex conjugate compositions of the present invention provide a stable dispersion (or colloid) and not a mere starch solution mixed with the additives (as taught by the prior art).

In short, in one embodiment, the biopolymer portion of the biopolymer-additive complex in the biolatex conjugate composition of the present invention "hides" the high molecular weight biopolymer *within* the nanoparticles of the composition. In this way the viscosity of the biolatex conjugates of the present invention is no longer dictated by the molecular weight and percent solids of the biopolymer, but instead is determined by the number, size and size distribution of the biopolymer nanoparticles themselves (and not the biopolymer itself, as described in the prior art).

By "additive" we mean one or more performance-enhancing additives including, without limitation, titanium dioxide, aluminum oxides, aluminum trihydrate, sodium aluminum phosphate, aluminum phosphate, sodium aluminum magnesium silicate, fly ash, zeolite, sodium aluminum silicate, talc, clay, delaminated clay, calcined kaolin clay, montmorillonite clay, nanoclay, silica particles, zinc oxide, calcium carbonate (ground and/or precipitated), optical brightening agents (OBAs), biocides, stabilizers and other beneficial (scattering or non-scattering) additives, and combinations thereof. By using particulate additives alone or in combination with OBAs, biocides, stabilizers and other beneficial (scattering or non-scattering) additives, a user can ensure the optimum location/positioning of the additives in the coating where it is most beneficial.

In one embodiment the additive is titanium dioxide (TiO₂). The TiO₂ may be any hydrophilic- or hydrophobically-modified particulate product in a powder or liquid dispersion, including the rutile, anatase and brookite varieties. The TiO₂ can be of any particle size, but in one embodiment has an average particle size of less than about 1.0 micron, and in other embodiments the TiO₂ has an average particle size of less than about 0.5 microns.

By "crosslinking agent" we mean any crosslinker known to the art, including but not limited to may be selected from dialdehydes, polyaldehydes, acid anhydrides, mixed anhydrides, (e.g. succinic and maleic anhydride), glutaraldehyde, glyoxal, oxidized carbohydrates, periodate-oxidized carbohydrates, epichlorohydrin, epoxides, triphosphates, petroleum-based monomeric, oligomeric and polymeric crosslinkers, biopolymer crosslinkers, and divinyl sulphone,. The crosslinking reaction may be acid-catalyzed or base-catalyzed.

In one embodiment, suitable dialdehydes and polyaldehydes include glutaraldehyde, glyoxal, periodate-oxidized carbohydrates, and the like. Glyoxal is a particularly suitable crosslinker. Such crosslinkers may be used alone or as a mixture of crosslinkers. The level of crosslinking agent can conveniently be between 0.1 and 10 weight % with respect to the total weight of the biolatex conjugate composition.

By "plasticizer" we mean an organic compound added to increase flexibility and toughness. Plasticizers contribute to the durability, gloss, and polish of a compound. In the present invention, the plasticizer may be selected from the group consisting of water, alcohols (ethyleneglycol, propyleneglycol, polyglycols, glycerol, sugar alcohols, urea, citric acid, citric acid esters, etc.) and mixtures thereof. In one embodiment, the total amount of plasticizers (i.e. water and other such as glycerol) in the composition of the present invention is preferably between about 0.5% and about 50% by weight of the composition.

The novel biolatex conjugate composition of the present invention therefore comprises, in one embodiment, a biopolymer-additive complex reacted with a crosslinker under shear forces to yield a biolatex conjugate, comprising one or more additives partially or fully encapsulated or surrounded by biopolymer nanoparticles.

The biolatex conjugate compositions of the present invention exhibit superior whiteness, brightness and enhanced performance for coated paper and paperboard, and other applications. The biolatex conjugates of the present invention exhibit these superior properties even when using extremely low levels of additives. Brightness and whiteness are among the most valued paper and paperboard properties. Increasing the concentration of additives such as titanium dioxide and OBA in a paper coating formulation does not normally continue to increase brightness, whiteness and other optical performance levels of the resulting coated paper and paperboard proportionally.

For instance, the scattering efficiency of additives such as titanium dioxides is reduced at increasing concentration levels due to "crowding" of the particles, because a) OBA performance reaches an optimum fluorescence and then drops off at higher levels, and b) because increasing levels of titanium dioxide cause fluorescence quenching of the OBA. The ability to separate additive particles and increase scattering efficiency is not readily feasible with synthetic binders, because the production of such latex emulsions via an emulsion polymerization process does not lend itself to producing stable colloid particles that incorporate the additive. Extruding the biopolymer-additive complex with the crosslinking agent under shear forces to yield the biolatex conjugate of the present invention addresses this long felt need. By creating novel biolatex conjugate compositions in which the desired spacing of TiO₂ particles is accomplished, such novel binders will have increased scattering efficiency even at relatively low levels of TiO₂. As a result, valued end-use properties such as the brightness and whiteness of the coated paper and paperboard will be enhanced without the need to resort to higher levels of TiO₂ (one of the most expensive pigments used in the manufacture of paper and board, relative to the much lower cost carbonate and clay pigments). In addition, the ability not to have to resort to high levels of TiO₂ in order to attain high whiteness and brightness is a major advantage, because high levels of TiO₂ negatively impact the beneficial fluorescence activity of the OBA.

In one embodiment, the biolatex conjugate compositions of the present invention provide superior whiteness and brightness because the additive(s) included in the composition has an increased scattering efficiency. The scattering efficiency of the additive is unexpectedly and dramatically increased by the spacing created between the additive particles in the biolatex conjugate. This spacing of the additive particles within the biolatex conjugates results from the separation forged by the biopolymer nanoparticles positioned around and between the additive particles, increasing the whitening and brightening effects or other beneficial performance attributes of the additives even when very small amounts of the additive are used.

For instance, in one embodiment biolatex conjugate compositions prepared according to the novel processes of the present invention can incorporate about 0.5 to about 3% by weight TiO₂ based on the total weight of the biolatex conjugate composition (and from about 0.025 to about 1.0% by weight based on the paper coating formulation, depending on the use level of the biolatex conjugate composition in the coating formulation). By incorporating the TiO₂ particles in a co-rotating twin screw extrusion process for production of the novel titanium dioxide-containing biolatex conjugates of the present invention, the spacing between the TiO₂ particles of the biolatex conjugates is increased to accommodate the conjugate bonds between the additive and the biopolymer particles. This increased spacing has been demonstrated by the inventors to enhance the whiteness and brightness performance of the biopolymer nanoparticle composition of the present invention on many paper substrates, including without limitation coated paper and paperboard. One of the striking findings is that a miniscule amount of additional 0.051 part of TiO₂ co-extruded with biolatex binder made so much impact on the brightness of paper coatings, whereas post-adding 0.051 part TiO₂ did not do anything, as expected.

Another important finding is that although the biolatex binder co-extruded with three parts TiO₂ showed much higher brightness measured without UV, as expected, it showed lower brightness measured with UV (with a noticeable decrease in the delta between the percent brightness with and without UV that was not observed for the physical blend with post-added TiO₂). This indicates that the more efficiently spaced TiO₂ particles in the biolatex conjugate interfered with the OBA activity by absorbing UV light in the region where the OBA molecules are active. This important discovery points out that for OBA containing paper coatings the use of anatase TiO₂ particles is preferred because they are less interfering with OBA than rutile TiO₂ particles. The same is true for other non-OBA interfering scattering additives.

### B. Methods of Production.

The novel biolatex conjugates of the present invention are produced by a variety of processes. For instance, in one embodiment the biolatex conjugate composition may be prepared using an extruder. However, other processes may be used. Examples of suitable processing equipment include Brabender static high shear mixers and Sigma Blade mixers.

In one process, a biopolymer feedstock, at least one plasticizer and at least one additive are fed to a feed zone of an extruder having a screw configuration such that the biopolymer feedstock and additive are processed under shear forces in the extruder to form the biopolymer-additive complex. A crosslinking agent is then added to the extruder downstream of the feed zone to form the biolatex conjugate product comprising the performance-enhancing additive(s) partially or fully encapsulated or surrounded by biopolymer nanoparticles.

By "extruder" we mean a machine that extrudes material through shaped dies. In one embodiment, the extruder has single flight elements in the feed zone. In other embodiments, the extruder has an upstream section, a downstream section, and an intermediate section between the upstream section and the downstream section, and the temperatures in the intermediate section are kept above 100°C.

By "screw configuration" we mean the position of the extruder screws. Generally in extruders, material is fed from a hopper into a barrel or cylinder where the material is progressively heated so that it will melt and can be fed by an extrusion screw into a die to form different types of shapes. Different screw configurations are useful for different materials. In one embodiment of the present invention, the screw configuration includes two or more steam seal sections wherein each steam seal section has an upstream pressure generating section and an adjacent downstream mixing section. Each upstream pressure generating section has a forward conveying flight, and each downstream mixing section has a reverse flight.

As described above, by "processed under shear forces" we mean a mechanical treatment, such as extrusion treatment, performed at elevated temperature (above 40°C-60°C, below the degradation point of the polymer, up to e.g. 140°C-200°C) under conditions of high shear. The shear can be effected by applying at least 100 Joules of specific mechanical energy (SME) per gram of biopolymer. By processing the biopolymer feedstock using shear forces, nanoparticles containing virtually no biopolymer granules or fragments of granules (i.e., non-crystalline nanoparticles) are formed.

In one embodiment of the present invention, shear forces in a first section of the extruder are greater than shear forces in an adjacent second section of the extruder downstream of the first section, and the crosslinking agent is added to the second section of the extruder. However, in other embodiments, shear forces in a first section of the extruder are greater than shear forces in a post reaction section of the extruder downstream of the first section wherein the post reaction section is located in a position in which a crosslinking reaction has been completed, and wherein water is added in the post reaction section.

In another process option the novel biolatex conjugate composition is formed by dissolving a biopolymer feedstock and one or more additives in a solvent (such as water or alkali) to yield a biopolymer solution, dispersing the biopolymer solution as fine droplets in a non-solvent (such as a vegetable oil, non-water miscible fluid or an organic solvent) with or without the use of a surfactant to generate an inverse emulsion. A crosslinking agent is then processed with the biopolymer solution under shear forces to form the biolatex conjugate composition of the present invention. After processing, the biolatex conjugate composition of the present invention is phase-separated from the non-solvent and then fully dispersed in an aqueous medium to form a biolatex conjugate dispersion.

### C. Methods of Use.

The novel biolatex conjugate compositions of the present invention exhibit superior performance properties, including superior whiteness and brightness properties, when used in, for instance, coating compositions for paper.

For instance, while the physical mixture of an aqueous emulsion of biopolymer nanoparticles prepared according to the prior art with TiO₂ particles shows no increase in whiteness and brightness for 0.05% additional TiO₂ based on the coating formulation, the same small amount co-extruded with the biopolymer feedstock and at least one plasticizer to yield the biopolymer-additive complex, which when reacted with a crosslinking agent yield the biolatex conjugate of the present invention yields a biopolymer nanoparticle composition with significantly enhanced brightness and whiteness performance on paper coatings.

This is significant, because normally a fine paper manufacturer might add 1-5% of TiO₂ (out of 100 pph of total pigment) to a paper coating formulation to enhance whiteness and brightness, recognizing that the higher end of this range will significantly reduce the beneficial fluorescence of the OBA and therefore an excess OBA must be added.

In addition, paperboard manufacturers who in some cases do not use OBA may add up to 15 or even 20% TiO₂ (out of 100 pph of total pigment) in the top coat layer, especially when brown recycled paper grades are used. For such applications, the novel biopolymer nanoparticle compositions of this invention significantly reduce the level of additives (such as TiO₂) required for use in a coating formulation.

The process according to the invention may achieve complete or near complete gelatinization of the biopolymer. Advantageously, by processing the biopolymer feedstock under shear forces in the presence of at least one plasticizer and at least one additive, virtually all of any native biopolymer (e.g. starch) crystalline structure is removed from the biopolymer-additive complex as measured using standard techniques (e.g. cross-polarization microscopy). This is useful because if some of the biopolymer retains its native crystalline structure, some of the biopolymer feedstock will not be incorporated into the biopolymer-additive complex. If that happens, when the biopolymer-additive complex is reacted with the crosslinking agent to form the biolatex conjugate composition of the present invention the crosslinker will not be able to react with the heterogeneous crystalline phase of the biopolymer to form the biolatex conjugate.

The process according to the present invention therefore provides a novel method of processing a biopolymer feedstock (e.g. starch), at least one plasticizer and at least one performance-enhancing additive with a crosslinker into biolatex conjugates even at higher production rates such as 1 metric ton per hour and greater. Preferably, the production rate is greater than or equal to 3.0 metric tons per hour of product. Given the cost-competitive nature and high volume and requirements of the mature and commodity-based coated paper and paperboard industry, such high production rates are critical for successful commercial implementation of the biolatex conjugate compositions of the present invention.

The methods of the present invention also provide increased control over the viscosity of a colloidal dispersion of the biolatex conjugates. For instance, after processing, the substantially dry biolatex conjugate composition can be dispersed in an aqueous medium to form a biolatex conjugate dispersion (hereafter, "biolatex conjugate binder").

The biolatex conjugates form a colloid upon dispersion in water, and the extrusion conditions of the present invention have an effect on the viscosity of these colloidal dispersions. The accurate control over the low-shear and high shear viscosity of latex binders and their rheological performance is essential for the coated paper and paperboard industry where product consistency is critical for the various types of high speed paper coating application systems.

Polymer colloids are impressive in terms of their ability to form high solids dispersions of a relatively high molecular weight polymer in water, typically from about 40 to about 65% solids (the theoretical maximum being approximately 72%, which has in fact been achieved for special emulsions with broad particle size distributions). Yet these dispersions still have a moderately low viscosity (e.g. 500-2500 cps; note that cps = mPas). The same polymer dissolved in a solvent would typically have a very high viscosity at 10-15% solids (upwards from 5000 cps).

For instance, whereas the viscosity of a polymer in solution is directly proportional to the molecular weight of that polymer, the viscosity of colloidal emulsions is not. It is independent of molecular weight, and determined largely by the number of particles, the size of the particles, and the size distribution of particles.

The relationship between the extrusion conditions of the present invention and the colloidal dispersion viscosity of the biolatex conjugates is not intuitive. The crosslinked biolatex conjugate compositions produced by the extrusion process of the present invention contain a small fraction (< ∼1%) of uncrosslinked biopolymer (e.g. starch) that acts as a steric stabilizer. Such a steric stabilizer is commonly known as a "protective colloid" to those skilled in the art. The biopolymer (e.g. starch) fragments that serve as the protective colloid for the biolatex conjugate dispersions are formed as a result of the reactive extrusion process, and are responsible for the advantageous shear-thinning rheological properties as well as the unexpected and extremely high shear stability of the biolatex conjugate binders.

For instance, the shear rate in the nip of a corrugating roll is about 20,000 s⁻¹ (very high shear), while it is several million s⁻¹ (extremely high shear) in high speed paper coating applications. Biolatex conjugate binders produced according to the present invention are therefore very well suited as high solids colloids in corrugating and paper coating applications.

While different extrusion conditions lead to compositions having differing viscosities, the biolatex conjugate compositions produced according to the methods of the present invention contain the performance-enhancing additive(s) as well as crosslinked nanoparticles that have high molecular weight (due to the crosslinks), but in addition contain the protective colloid that can have lower or higher molecular weight depending on the aggressiveness of the extrusion conditions. A process according to the present invention can therefore manipulate the molecular weight of the protective colloid formed in-situ with the biolatex conjugate compositions of the present invention.

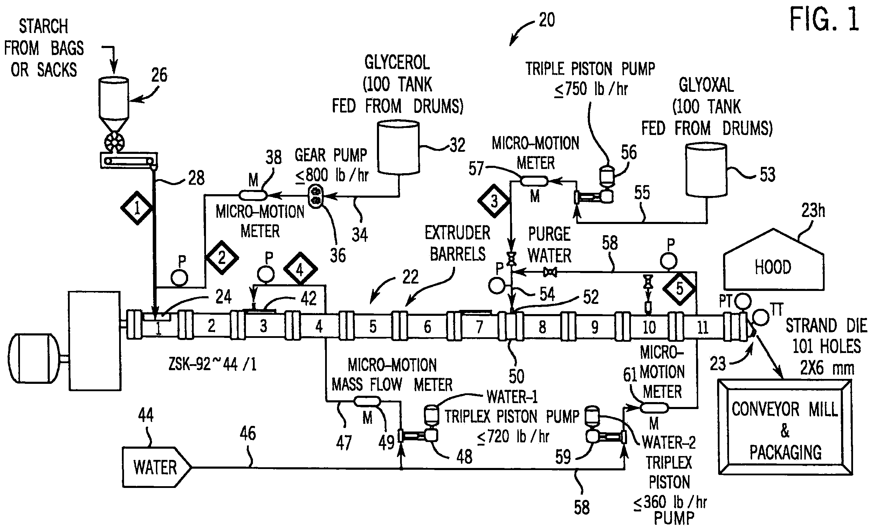

Referring now to the figures, Figure 1 shows an extruder apparatus 20 suitable for use in the process of the present invention. Any extruder can be used to prepare the novel conjugate composition of the present invention using the novel processes described herein. The apparatus of Figure 1 is merely an exemplary version. The apparatus 20 includes a twin screw extruder 22 having eleven extruder barrels 1 to 11 with end flanges by which the barrels 1 to 11 are detachably joined to each other to create two overlapping bores for receiving the two extruder screws. The apparatus 20 also includes an extruder die 23 with an associated exhaust hood 23h.

Barrel 1 has an inlet 24 for receiving a biopolymer (starch in Figure 1), one or more performance-enhancing additives (titanium dioxide in Figure 1), and at least one plasticizer (glycerol in Figure 1). The inlet 24 receives dry starch and the one or more performance enhancing additives from a feed hopper 26 by way of a feed conduit 28. The inlet 24 receives glycerol from a plasticizer tank 32 by way of a feed conduit 34 that includes a feed pump 36 and a Micro-Motion brand mass flow meter 38.

Barrel 3 has an inlet 42 for receiving water (and other liquid additives such as glycerol). The inlet 42 receives water from a water source 44 by way of a feed conduit 46 and a feed conduit 47 which includes a feed pump 48 and a Micro-Motion brand mass flow meter 49.

A linking barrel 50 between barrels 7 and 8 has an inlet 52 for receiving a crosslinker (glyoxal in Figure 1) and purge water. Inlet 52 receives glyoxal from a crosslinker tank 53 by way of a feed conduit 54 and a feed conduit 55 that includes a feed pump 56 and a Micro-Motion brand mass flow meter 57. Inlet 52 receives purge water from water source 44 by way of feed conduit 46 and a feed conduit 58 that includes a feed pump 59 and a Micro-Motion brand mass flow meter 61. Barrel 10 may also receive water from feed conduit 58. O

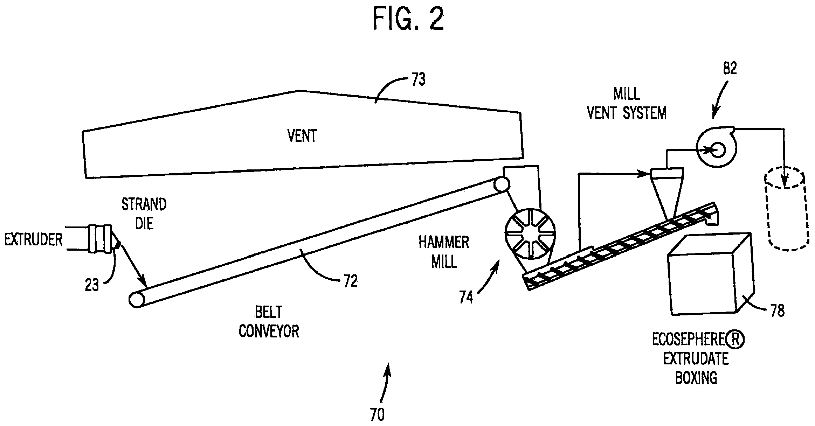

Referring now to Figure 2, there is shown a packaging system 70 of the apparatus 20. The packaging system 70 includes a belt conveyer 72 that receives extrudate from the extruder die 23. After processing the biopolymer feedstock, at least one additive and at least one plasticizer to yield the biopolymer-additive complex, and after reacting the biopolymer-additive complex with a crosslinking agent under shear forces, the biolatex conjugate composition of the present invention is extruded from the apparatus 20. An appropriate conveyer vent system 73 is also provided. The belt conveyer 72 transfers the biolatex conjugate composition to a hammer mill 74 for milling into smaller sized particles. The milled the biolatex conjugate composition may then be packaged in boxes 78 (or bags or supersacks or bulk trucks or railcars as may be required). An appropriate mill vent system 82 may also be provided to capture fine particulate matter from the hammer mill 74. As an alternative to the strand and belt conveyor, a dry hot face cutter and pneumatic conveyor have been used to cool and convey the biolatex conjugate composition to a mill.

The present invention provides a process that has a unique sequence of unit operations and a unique process control scheme which unexpectedly permits the manufacture of the novel biolatex conjugates of this invention at production rates of greater than or equal to 1.0 metric tons per hour of dry product on a modified ZSK-92 Mega compounder. (A ZSK-92 Mega co-rotating twin screw compounder is available from Coperion Werner & Pfleiderer GmbH & Co., Stuttgart, Germany.) Based on volumetric scale up, rates of 3 metric tons/hour are anticipated on a ZSK-133 at 500 rpm. Nevertheless, similar results can be obtained on other brands and models of extruders by designing their screw configurations.

It is the combination of unit operations used in a process according to the invention that provides advantages over prior processes. In Examples 1 through 10 of U.S. Patent No. 6,667,386, feed rates were 8.4 to 8.8 kg/hr of premix including starch, water and glycerol. This compares with a normal production rate of 110 to 160 kg/hr for a commercially available extruder sold under the designation Berstorff ZE-40 (which was used in the examples of U.S. Patent No. 6,667,386). Steam back venting was not a problem in the examples of U.S. Patent No. 6,667,386 because of the low temperatures and relatively high area to volume which are both as a result of the scale of the examples of U.S. Patent No. 6,667,386.

With geometrically similar machines, the surface area scales are based on the diameter squared and the process volume based on the diameter cubed. This means that as the process is scaled up the area to volume ratio decreases proportionally to the diameter; and that the process must be operable independent of the barrel temperatures. In addition to the relative scale, the Berstorff ZE-40 extruder has a low volume for its size as a result of a shallow screw configuration. Relative machine volume is compared by the ratio of the screw diameter to the root diameter or outside diameter/inside diameter (OD/ID). On the Berstorff ZE-40 extruder, the OD/ID ratio is only 1.24:1. Most current production machines have an OD/ID ratio of 1.46:1 and higher. The ZSK-58, -92, and -133 compounder has a volume ratio of 1.55:1. This is important because of the floodability of starch resulting in a relatively low effective bulk density. In order to achieve viable production rates, higher volume extruders are desirable. For example, a ZSK-133 compounder can increase the rate up to the 3 metric tons per hour range.

### A. Feeding

Starch is a fine powder which is prone to flooding at high screw speeds and specific rates (kg/hr/rpm or mass of product per hour at given rpm). Plastic pellets and most particulate additives, when fed to the intake of an extruder, are readily taken up in the feedzone. Flooding of light powders results in limited feed rates and this can therefore slow down the overall process output, efficiency and product cost. Given the cost competitive nature of the industry, viable rates for the production of the nanoparticles are believed to be at least 1 metric ton per hour. In the examples of U.S. Patent No. 6,667,386, premixing or preconditioning the starch was used, which made the starch easier to feed and reduced its tendency to flood the extruder. However, the novel methods of the present invention allow one to eliminate premixing as a process operation and to feed the ingredients directly to the extruder (as in feed conduits 28 and 34 of the apparatus 20 of Figure 1). This increases the efficiency and cost-effectiveness of the present invention as compared to the prior art.

Higher volume 2D undercut elements have been used to maximize the solids conveying capacity. It has been discovered that by using the single flight (SF) elements (see Robert H. Wildi and Christian Maier, "Understanding Compounding", Hanser Gardner Publications, 1998, pages 97-98), and by injecting either water or glycerol (plasticizer) into the feed inlet 24, much higher rates can be achieved than with the undercut elements.

Some advantageous process details in the extruder feed zone include, without limitation: (i) the feeding of neat starch and additives, (ii) the feeding of glycerol and/or water to the center of the feed inlet opening to help solids conveying and achieve a similar effect as preconditioning the starch, and (iii) the use of single flight elements which is good for floodable powders and minimizes steam back-venting that causes the feed zone to plug.

### B. Steam Seal

The process must be run with high temperatures in order to achieve complete gelatinization of the starch at viable production rates where the retention time is on the order of 10 seconds or less. High temperatures are also used to control the viscosity of the biolatex conjugates product when dispersed in water. These temperatures are above the boiling point of water at atmospheric pressure; therefore, pressure must be maintained in the extruder 22 to keep the water from flashing to steam. Because the steam is a separate phase, it can readily flow backwards towards the feed inlet 24. Once in the feed system, it will condense and wet the starch, causing flow blockages due to partially cooked starch paste in a gravity flow environment.

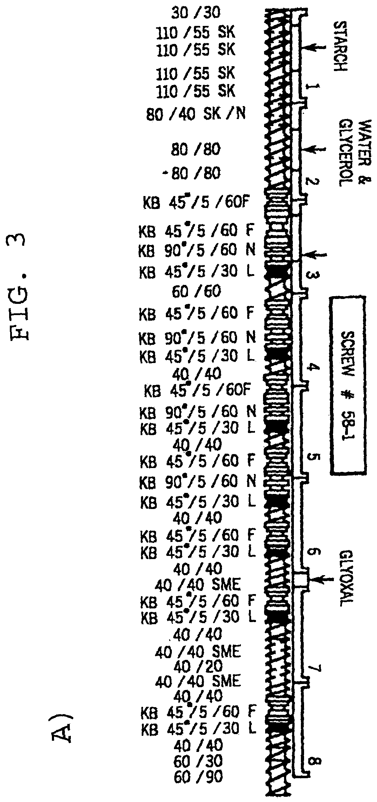

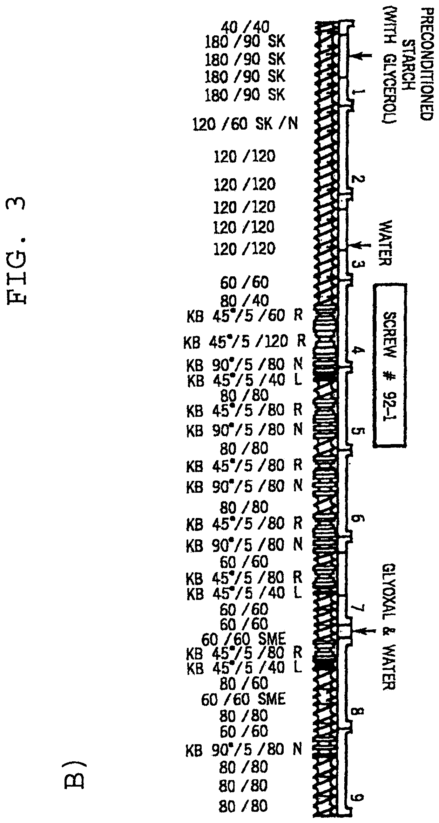

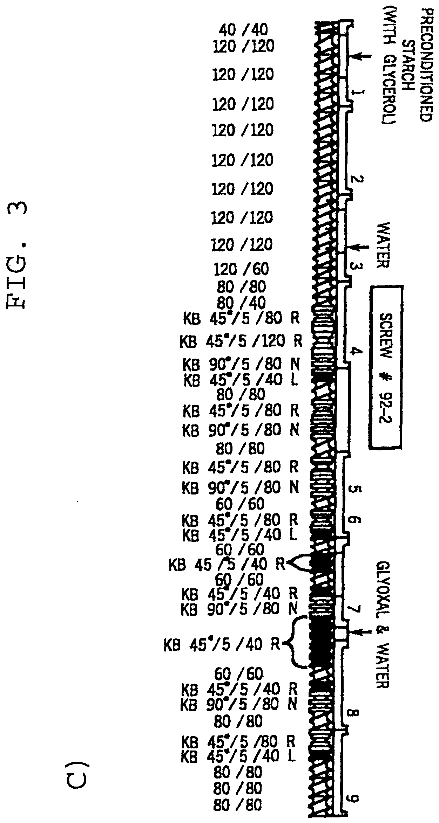

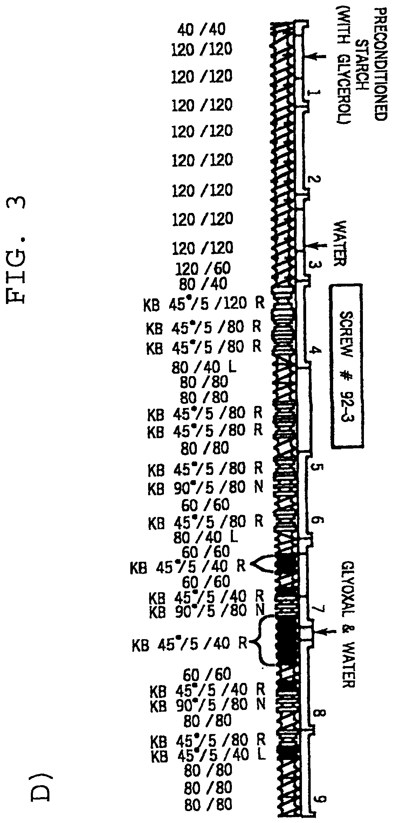

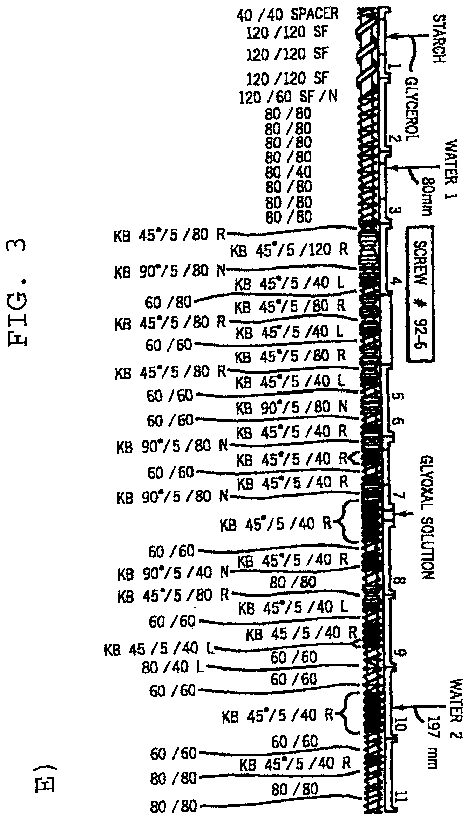

It has been discovered that a steam seal must be formed with a series of relatively mild restrictions as in the screw design depicted in Screw # 92-6 of Figure 3. (One of the two screws is shown for illustration throughout Figure 3 as is normal in the industry.) Screw # 92-1 of Figure 3 had steam back-venting in about 45 minutes and Screw # 92-3 of Figure 3 with a strong restriction was operable for less than 15 minutes. It is necessary to balance these restrictions so that the pressure building capability of the screw is greater than the rise in the vapor pressure of the water due to increasing temperature. Screw # 92-1 of Figure 3 used relative mild restrictions: neutral kneading blocks, while that in Screw # 92-3 of Figure 3 used a very strong restriction: a reverse conveying element. With the successful Screw # 92-6 of Figure 3, a balance was achieved by using a series of moderate restrictions, each preceded by enough pumping and mixing to fill the flights and overcome the restriction.

When the temperatures in the process exceed 100°C, steam seals are necessary to prevent water from flashing to steam and back venting to the feed opening. This is done by gradually increasing the pressure in the extruder faster than the vapor pressure of water increases due to the increasing temperature used to cook and break down the starch for viscosity control. For example, at 200°C, the absolute vapor pressure of pure water is 1.57 megapascals (i.e. 1.47 megapascals gauge or 213 psig). Seals are formed by using a restriction which must be overcome by a forward pumping action. Seals are influenced by the flight fillage in the extruder with higher specific rates normally resulting in a more robust seal to a point where the flights become too full for pressure generation.

It has been found that if a series of moderate seals are used, the pressure in the extruder can be increased gradually. The effect of progressive seals is cumulative. If too strong of a seal is used such that the energy and resultant temperature/pressure increase necessary to overcome it is greater than the pressure in the extruder before it, steam will form and back vent. The seals are formed by a combination of a restriction proceeded by enough forwarding elements to more than overcome it. In the successful example, three Left Hand (reverse) Kneading Blocks (LKB) are used to generate the steam seal. When pressure is being generated, the flights or kneading blocks will be full. It is important that the forward pumping is sufficient to overcome the steam pressure increase due to temperature increases in each mixing section. Each mixing section is preceded by conveying to insure that there is adequate pressure generation. By using a series of such mixing and pressure generation sections, the starch can be heated to increase the rate of gelatinization and to control the product viscosity without steam back venting. It is preferred that this be done with mixing sections such as kneading blocks to keep the starch well mixed and eliminate small regions of un-wetted starch that are akin to making gravy with lumps in it. If these are allowed to form, they will not become gelatinized nor subsequently react with the crosslinker and will adversely affect the dispersion viscosity and long term stability of aqueous dispersions of the product.

The design of the first mixing section/seal is very crucial because significant pressure cannot be generated in the solids conveying preceding it. It must be strong enough to initiate the gelatinization (i.e., transition from solid to thermoplastic melt) of the feedstock without generating excessive steam pressure. This can be done with traditional forward and reverse KB combinations or with the Eccentric tri-lobe kneading blocks.

Some advantageous process details regarding the steam seal include, without limitation: (i) the use of progressive seals to eliminate steam back-venting because one strong restriction causes back venting; (ii) the building of pressure faster than the vapor pressure of water to stop back venting; and (iii) the ability to go to higher production rates.

### C. Gelatinization

It has been demonstrated that complete gelatinization of the starch is necessary for the viscosity stability of aqueous dispersions of the biolatex conjugate product. Residual ungelatinized starch including "ghosts" (fragments of starch granules and partially gelatinized starch) will cause the water-based dispersion to gel overnight or in a matter of days on the shelf. The degree of gelatinization can be analyzed with cross-polarization microscopy. At high rates typical of modern extrusion operations, this is very difficult because of the relatively short residence time in the initial mixing zone prior to the crosslinking reaction zone.

It has been discovered that by using a relatively strong, high shear initial mixing section with minimal back-flow, complete (i.e., absolutely no native starch remains) gelatinization can be achieved at high rates. Complete gelatinization is important, because it is critical to convert all of the biopolymer into biopolymer nanoparticles and biolatex conjugates. This is not possible when a portion of the native biopolymer feed remains in its native crystalline granular structure, because the crosslinker will not be able to react with the heterogeneous crystalline phase to form nanoparticles. After this high shear section, a series of lower shear mixing sections are used to provide mixing, further heating, and residence time for the "cooking" of the starch. As discussed above, these are also designed to form a steam seal.

Some advantageous process details to achieve complete or near complete gelatinization include, without limitation: (i) water injection at the feed inlet to plasticize the starch and control product viscosity, (ii) the use of a strong initial kneading zone to avoid residual ungelatinized starch including "ghosts", and (iii) the use of progressive seals to eliminate steam back-venting.

### D. Reaction

The crosslinking reactant (e.g. glyoxal) is injected to the extruder 22 in a moderate to low shear mixing zone designed to provide good distributive mixing of the low viscosity liquid into the extremely high viscosity starch paste. This is done to eliminate pooling of the crosslinking reactant as a separate phase and to achieve distribution in the starch paste as quickly as possible for a consistent reaction. Although this is extreme in extruders, this is somewhat analogous to adding water to a bread dough, or adding milk to a very thick pancake batter. After the initial mixing, a series of conveying and mixing sections are used to allow time and mixing for completion of the reaction.

It has been discovered that the crosslinking reactant of the process of U.S. Patent No. 6,667,386 should be added after the very high shear zones used for gelatinization of the starch. It is important to do this after gelatinization is complete, because the crosslinker will not be able to react with the heterogeneous crystalline phase to form the biopolymer nanoparticles and biolatex conjugates.

Some advantageous process details to achieve homogeneous reaction include, without limitation: (i) glyoxal injection over mixing elements to eliminate "pooling", and (ii) the use of staged mixing zones with mild mixing after glyoxal injection, i.e., dividing and combining, not shearing, with good retention time.

### E. Post Reaction Conditioning

It has been found that because of the relatively high temperatures of the melt phase in the extrusion process (up to 210°C) used to control the final product viscosity when dispersed in water, steam blowing out the extruder die 23 can be a significant problem affecting both the operability of the process and consistency of the product quality. Without the proper process, pressure and temperature in the extruder build up until it overcomes the die restriction and then literally empties the end of extruder in a surge or blow out. This flashing cools the end of the extruder; and as a result has an effect on the product dispersion viscosity. The net result is a cycle in the viscosity of the instantaneous discharge and the final product becomes a blend of a variable production.

This problem is overcome by the addition of a very strong seal at the end of the reaction zone to achieve a controlled throttle of the steam pressure followed by a post reaction conditioning zone where additional water can be added to the product to control the behavior of the extrudate and the bulk properties of the product without uncontrolled effects on the dispersion viscosity. The strong seal eliminates cooling in the reaction zone. As with the crosslinker (e.g., glyoxal), the post reaction water is injected to the extruder 22 in a moderate to low shear mixing zone designed to provide good distributive mixing of the low viscosity liquid into the very high viscosity paste.

The post reaction zone is also used to generate the pressure necessary to pump the product through the die 23.

Some advantageous process details in the post reaction zone include, without limitation: (i) the use of a strong seal to control flashing and eliminate cooling in the reaction zone, (ii) the use of water injection over mixing elements to eliminate pooling, (iii) the use of water injection to control conveyor handling and to control bulk properties of the product, and (iv) the application of sufficient pressure to overcome the restriction of the extruder die to insure continuous pumping to the extruder die.

### F. Die Restriction

The die 23 must be designed to generate adequate back pressure to control flashing/cooling in post reaction zone and to minimize surging. It also is used to allow controlled foaming of the extrudate due to flashing of water to steam.

Control of the foaming is very important to the product. Too much foaming and the product bulk density is low resulting in extra shipping expenses. If there is inadequate foaming, it is difficult to rapidly cool and dry the product quickly, and the hard granules that are formed are difficult to disperse in water for the end application.

Thus, some advantageous process details for the extruder die include, without limitation: (i) the use of back pressure to control flashing/cooling in the post reaction zone and to minimize surging, and (ii) good surface area generation by foaming extrudate noodles, effective cooling and drying by flashing steam, and improved "dispensability" in water because of foaming.

### Process Control

Starch is a bio-based feedstock (by "feedstock" we mean the raw material that is converted to another form or product) and can vary from lot to lot. Process control is necessary to manipulate the viscosity of the biolatex conjugate product in dispersion (the "biolatex conjugate binder") for a consistent product. It is also desirable to produce different viscosity products for various applications. It has been discovered that the quantity of water added to the extruder can be used for such purposes. In the process of the invention, water is injected in two locations: (1) upstream, before gelatinization; and (2) downstream, after the crosslinking reaction is complete.

### A. Upstream Water and Viscosity Mechanism

The first water injection is used as the primary viscosity control agent. The principal mechanism that affects the dispersion viscosity is degradation of the starch in the process of producing the biolatex conjugates. This can be due to mechanical/shear forces and/or due to thermal degradation of the starch. Evidence from numerous studies indicates that the thermal effects are more significant. In scale up evaluations without post reaction conditioning, an excellent correlation was found between the temperature of the extrudate and the dispersion viscosity. In subsequent evaluations on a ZSK-25 mm bench scale twin screw extruder where surface area and heat transfer can be used to allow very high specific mechanical energy (SME) and therefore shear inputs to the product independent of the paste temperature, the controlling factor was temperature, not shear. In other words, higher barrel temperatures caused lower SMEs and higher in-process temperatures resulted in lower dispersion viscosities.

### B. Downstream Water

The second (downstream) water is used predominantly to control the handling characteristics of the product in the die 23 and in the post extruder handling/packaging system 70 by cooling, increasing the moisture content and reducing the foaming of the biolatex conjugate. Downstream water has a slight effect on the viscosity; however, it is much less than that of the upstream water and can be compensated for by minor adjustments of the upstream quantity.

Thus, some advantageous process details to improve dispersion viscosity include, without limitation: (i) increasing upstream water to decrease the product viscosity in a dispersion (and vice versa) because water is a plasticizer in the extruder and is used to control the amount of work input by the screws, and after the extruder, the water evaporates and therefore its plasticizing effects are in the extruder only, (ii) increasing downstream water for less blowing and surging at the extruder die, a more rubbery/less friable noodle, and higher product moisture content (and vice versa), (iii) recognizing that downstream water has much less of an effect on the viscosity than upstream water and therefore when changing downstream water, a much smaller, opposite change in upstream water should be made to maintain the viscosity, (iv) increasing screw speed to decrease the product viscosity in a dispersion (and vice versa), and (v) increasing barrel temperature to decrease the product viscosity in a dispersion (and vice versa).

Although not as economically favorable as the continuous high-throughput extrusion process described above, the biolatex conjugates can in principle also be formed via other processes. In other high shear process options, said shear forces are introduced in high shear mixers including a Brabender static mixer or a Sigma Blade mixer. In yet another process option, the biopolymer is dissolved in water or alkali and dispersed as fine droplets in a non-solvent (such as a vegetable oil or a non-water miscible fluid or an organic solvent) with or without the use of a surfactant to generate an inverse emulsion together with the performance enhancing additives, following which a crosslinking agent is added. After the process, the product is phase-separated from the non-solvent and then fully dispersed in an aqueous medium to form a biolatex conjugate dispersion.

### Examples

The following examples serve to illustrate the invention and are not intended to limit the invention in any way. Indeed, various modifications of the invention in addition to those shown and described herein will become apparent to those skilled in the art from the foregoing description and the following examples and fall within the scope of the appended claims. Examples 1-10 may serve as reference and do not produce a biolatex conjugate composition.

Specific feed and run conditions are listed in Tables A and B. The specifics for the paper coating formulations are provided in Tables C and D.

### Examples 1 and 2

Examples 1 and 2 represent the initial scale up from a ZSK-58 extruder to a ZSK-92 twin screw extruder. See Screw # 58-1 and 92-1 in Figure 3. One extra barrel of solids conveying was used on the 92 mm extruder because an eight barrel configuration was not available. Because Screw # 58-1 of Figure 3 was deemed too strong (meaning this screw design put too much energy into the product), three left hand kneading blocks were removed from the gelatinization zone and one from the reaction zone for Screw # 92-1 of Figure 3. Also, an extra water injection was added along with the glyoxal (crosslinker) solution to allow evaluation of the effects of its concentration. As received, the glyoxal solution is 40% active in water. At two parts of glyoxal, this is equivalent to a base or minimum of 3 parts of water with it if no additional water is used. (See Table A.)

On startup, a preliminary gelatinization experiment without a die was run at 726 kg/hr and 300 rpm for a specific rate of 2.42 kg/hr/rpm without flooding the feed. This compares to a specific rate equivalent of 1.26 kg/hr/rpm for the ZSK-58 extruder realized at 92 mm. The reason for being able to operate with a higher flight fillage is the fact that the starch was preconditioned in Example 2 by mixing it with the glycerol off-line in a ribbon blender: thus improving its feeding characteristics. Based on subsequent results with this screw, such a high specific rate is not sustainable because of buildup filling in the undercut, thus decreasing both the volume and conveying efficiency of the two-diameter undercut elements (SKs). For comparison of the ZSK-58 extruder to the ZSK-92 extruder, a 3.99:1 volumetric scale up factor is used. Therefore, a specific rate of 0.316 on the ZSK-58 extruder in Example 1 would be equivalent to 1.26 on the ZSK-92 extruder.

Screw # 92-1 of Figure 3 was operated at a flight fillage factor of 1.34 to 1.40 kg/hr/rpm and a slightly lower screw speed than Screw # 58-1 of Figure 3. There was no steam back-venting on the ZSK-58 extruder; however, with Screw # 92-1 of Figure 3, it would shut the line down after only about 15 to 30 minutes of continuous operation.

### Example 3

Example 3 is similar to Example 2 but represents a reduction in the quantity of water added downstream with the glyoxal (crosslinker) to determine the effect on the product viscosity. The extra water was reduced from 3.0 to 2.1 parts. The screw speed for Example 3 was 5% higher than that for Example 2. There was not a significant effect on the end product viscosity (measured as a standard 25% solids aqueous dispersion at 25°C and 100 rpm on a Brookfield viscometer). More notably, viscosity was slightly higher even though the SME was about 10% higher in Example 3 due to the water and extruder rpm differences. In previous work, it is inferred that higher shear rates result in lower dispersion viscosities. This is contrary to that and demonstrates that there are other controlling factors that affect viscosity. As with Example 2, steam back venting shut the line down after a short time.

### Example 4

Example 4 was run on Screw # 92-2 of Figure 3. The differences with this screw vs. 92-1 of Figure 3 were the replacement of the 2D pitch SK (undercut elements) in the feed zone with 1.5D normal elements; the replacement of a neutral kneading block with a left kneading block near the end of Barrel 6; the replacement of the left hand restriction in Barrel 7 with lower shear distributive mixing; a modification of the distributive mixing for the glyoxal (crosslinker) addition; and an adjustment of the mixing in the reaction zone.

The change in Barrel 6 was an attempt to help keep the steam from back venting. The SKs were replaced because the undercuts were filling up with hard starch effectively making them normal 2D conveying elements. The modifications in the glyoxal mixing and reaction mixing were because it was found that the unwiped slots in the slotted mixing element were filling up with starch and rendered ineffective. They were replaced with narrow disk forwarding kneading blocks.

In the initial run with this screw in Example 4, the flood feeding limit was determined to be 1.35 kg/hr/rpm. When compared with Example 2, which was run with the same formulation and a higher screw speed but equivalent specific rate, the resultant SME was higher and the dispersion viscosity was lower as a result of the extra mixing.

### Example 5

Example 5 was run on Screw 92-2 of Figure 3 at a higher screw speed vs. Example 4 to move away from the point of impending feed flooding. The result was an increase in the SME and a reduction in the standard 25% solids dispersion viscosity. The line was operated at these conditions for 40 minutes before it was shut down due to steam back venting.

### Example 6

Example 6 was run on Screw 92-3 of Figure 3. This screw had left hand conveying elements replacing the first two left hand kneading blocks in Screw 92-2 of Figure 3. This was an attempt to achieve a more effective steam seal. The seal was too strong, forcing the steam backwards from the first kneading section resulting in plugging of the feed section. The line could not be operated long enough to line out and obtain a representative sample.

All subsequent examples (Examples 7-10) were run on Screw 92-6 of Figure 3.

### Examples 7 and 8

Examples 7 and 8 are process control examples. Screw 92-6 had a balanced and effective steam seal in the gelatinization zone and had the addition of a post reaction seal followed by a conditioning zone to control the product behavior at the die independently of the reaction. Also, to eliminate the need for off-line preblending, it used single flight feed elements and glycerol addition to the center of the feed opening just above the screws.

All work on this configuration has been consistently run at specific rates of ∼2 kg/hr/rpm; representing a major improvement over the previous screw designs. When compared with Example 5, the rate at a given screw speed is virtually doubled. This is because of the combined effect of glycerol injection point and the single flight elements.

The differences between Examples 7 and 8 are the quantities of water injected before gelatinization and in the post reaction zone. This was done to produce two different dispersion viscosity products, Example 7 at 125 mPa.s and Example 8 at 200 mPa.s. The higher viscosity was made by increasing the upstream water from 0.8 to 11.4 parts. At the higher upstream water loading in Example 8, the post reaction water was not needed to control the discharge.

Success on the 92-6 screw was based upon the design changes, and in addition to this, the addition of single flight elements to allow for glycerol addition in the feed zone.

### Example 9

The effect of operating at higher rates with proportionally higher screw speeds for a constant specific rate is demonstrated in Example 9 vs. Example 8. The rate was almost doubled to 1.1 metric tons per hour with no changes other than the screw speed. The product dispersion viscosity was slightly lower which can be compensated for by a slight decrease in the water loading. Based on extrapolation of this data, 733 rpm would be necessary for 1.5 metric tons per hour. The Mega compounder that has been used in this work can be run at that speed.

### Example 10

Example 10 demonstrates the starch feed uptake improvement by addition of glycerol (plasticizer) to the center of the barrel feed opening just above the screws. The extruder was lined out at the same conditions as with Example 7 and then the glycerol was turned off. Flooding of the feed occurred almost immediately and a representative sample was not obtained. The difference in rates for Examples 7 and 10 is the glycerol.

This effect was replicated in some independent work on a ZSK-58 extruder using a screw that is geometrically similar to Screw # 92-6 of Figure 3. Flooding was almost immediate when the glycerol to the feed opening was stopped. However, when water was added to the feed opening in place of the Glycerol, the rates were sustainable.

The data for Examples 1-10 is shown in Tables A and B below. With respect to the barrel temperature profiles presented in Table B, higher temperatures were used in Example 1 on the 58 in order to run more of an adiabatic system for better scalability. In Example 6 with Screw 92-3, a lower set point was used for Barrel 5 in an attempt to have an effect on the steam seal. With Screw 92-6, Examples 7-10, the last two barrels for the post reaction conditioning zone were cooler to aid in the process.

### Example 11

Example 11 demonstrates the enhanced properties obtained for the novel biolatex conjugates that have been produced by co-extrusion with a performance enhancing additives such as titanium dioxide, to yield new biolatex compositions that exhibit enhanced performance for coated paper and paperboard and other applications.

The "ECOSPHERE® 2202" product (containing no titanium dioxide) used in this example was produced on a ZSK-90 Twin Screw Extruder using similar conditions to those in examples 7 and 8 with a geometrically similar screw design to that on the 92 mm extruder. The "ECOSPHERE® 92238" product, prepared by co-extrusion with 1 pph (0.99%) of a hydrophobic TiO₂ (DuPont Ti-Pure® R-101) and the "ECOSPHERE® 92240" product, prepared by co-extrusion with 1 pph (0.99%) of a hydrophilic TiO₂ (DuPont Ti-Pure® R-900), were both also prepared on the same ZSK-90 Twin Screw Extruder with the same operating conditions as the "ECOSPHERE® 2202" product. No difference was seen in the extruder operation. The "ECOSPHERE® 92241" product, prepared by co-extrusion with 3.2 pph (3.1%) of a hydrophilic TiO₂ (DuPont Ti-Pure® R-900), was produced on a Bühler-62 Twin Screw Extruder using a similar screw design and after reproducible conditions were established for the "ECOSPHERE® 2202" product. In each case, for the "ECOSPHERE® 92238", the "ECOSPHERE® 92240", and the "ECOSPHERE® 92241" products, the titanium dioxide was fed to the feed throat of the extruder, either as a pure powder, or as a master batch blend with starch, at the required and calibrated feed rate to ensure the products contained the appropriate amounts of titanium dioxide. This was confirmed by subsequent ash content analysis as well as CIE Lab color measurement (measured on HunterLab ColorQuest XE in RSIN mode, 50 mm cell).

The coating formulations prepared in this Example 11 are illustrated in Table C. The pH, % solids, Brookfield and Hercules viscosity for the paper coating formulations in Table C are provided in Table D, along with the coat weight results for paper coated prepared on a CLC Coater. These results demonstrate that all 5 coating formulations and their coat weights are on target, and therefore the performance for the coated paper products is directly comparable. The samples were coated on 42 lbs/3300 ft² (63 gsm) paper, using a rigid blade @ 3,030 ft/min, with a drying time of 15 to 25 seconds at 100% power. They were calendered using 1 pass over chrome-finished heated metal roll (mates up to coated paper surface) and a cotton roll (uncoated side) at 750 pli and ∼60 °C (143 °F).

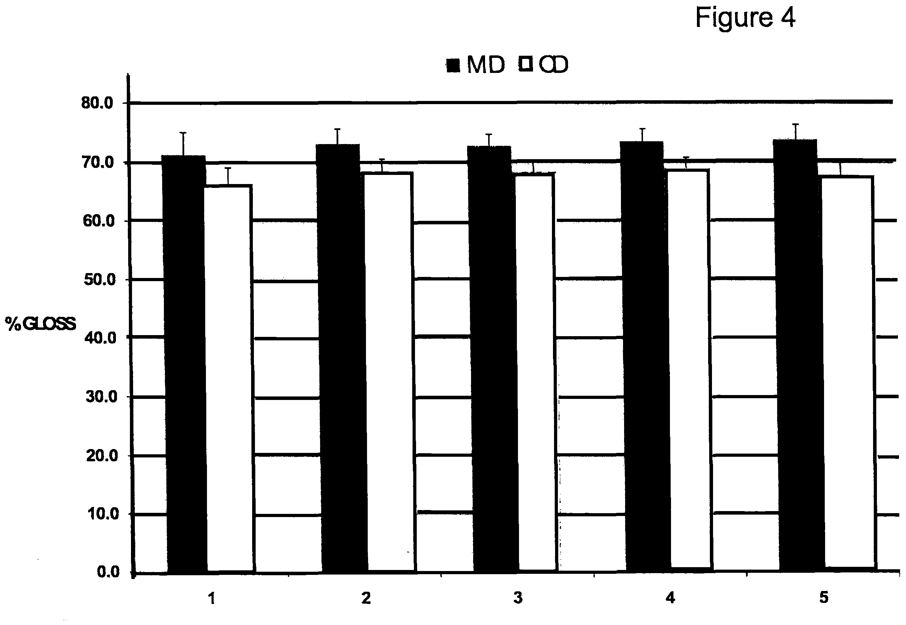

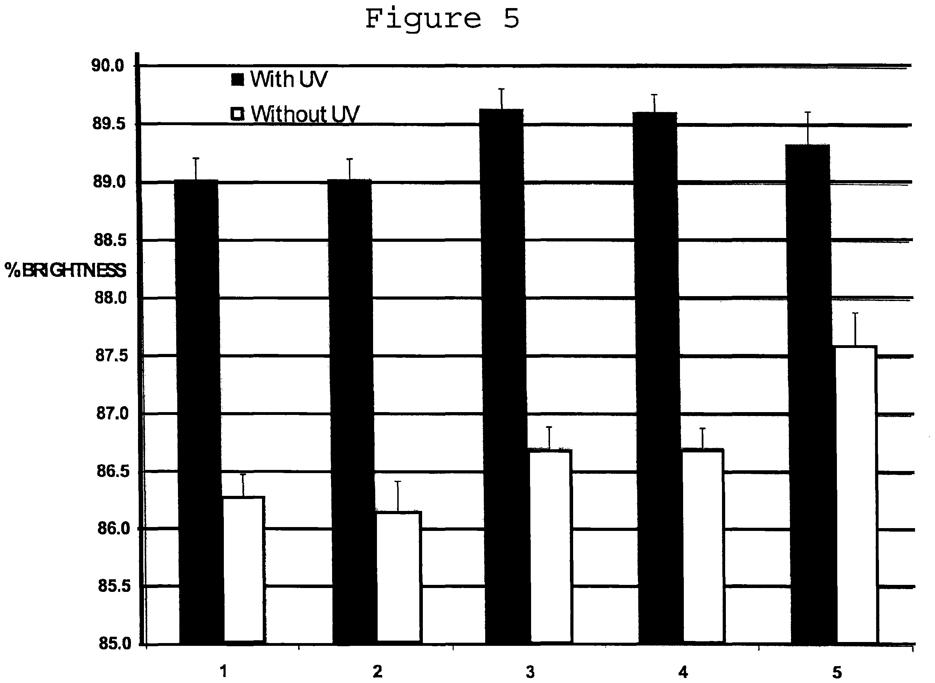

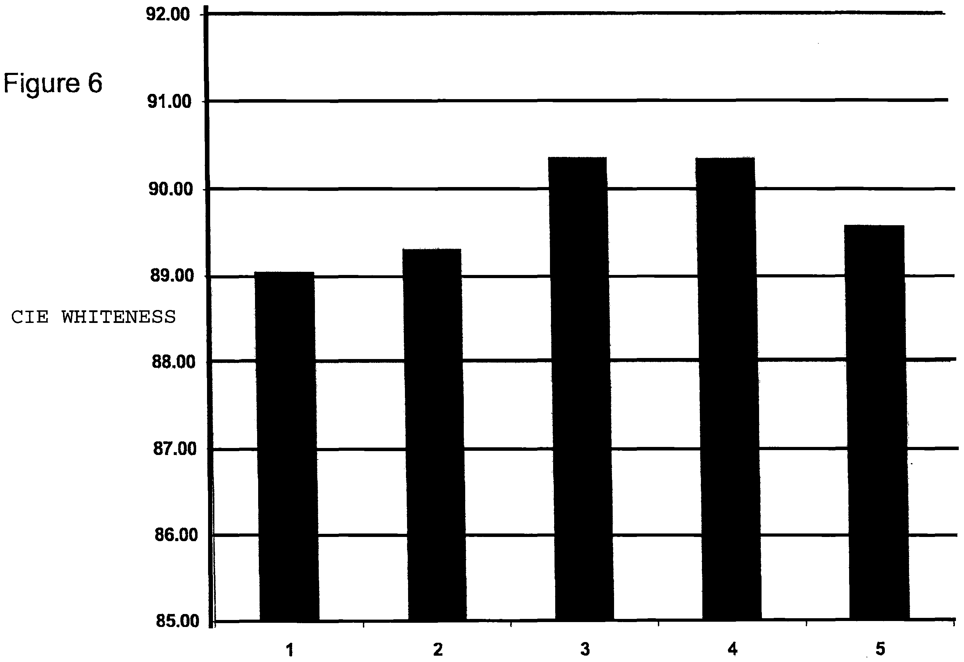

Figure 4 illustrates that all 5 coated products attained the target % gloss. This further underscores the validity of performance comparison amongst these 5 samples. The performance in terms of % Brightness and % Whiteness for sample 1, the control biolatex binder which contains no performance enhancing additive, is shown in Figures 5 and 6. Samples 3, 4 and 5 illustrate the increase in % Brightness and % Whiteness as a result of co-extrusion with 1 pph (0.99%) of a hydrophobic TiO₂ (DuPont Ti-Pure® R-101), with 1 pph (0.99%) of a hydrophilic TiO₂ (DuPont Ti-Pure® R-900), and with 3.2 pph (3.1%) of a hydrophilic TiO₂ (DuPont Ti-Pure® R-900), respectively. These results show a significant increase in brightness and whiteness performance as a result of co-extrusion with a performance enhancing additive such as titanium dioxide. In sharp contrast, the results for sample 2 demonstrate that a physical mixture of an aqueous emulsion of biopolymer nanoparticles with TiO₂ particles led to virtually no increase in whiteness and brightness for the same amount of 0.05% additional TiO₂ based on the coating formulation, i.e. the same additional amount added to the coating formulation as what was co-extruded with the biolatex binder, which as noted above was found to significantly enhance brightness and whiteness of the paper coating.

### Example 12 (Reference)

A physical mixture of an aqueous emulsion of biopolymer nanoparticles with TiO₂ particles was prepared via intense high shear blending using a Silverson high shear dissolver agitator using 0.99% TiO₂ (DuPont Ti-Pure® R-900). Comparison with sample 4 above showed that the post-blended suspension was relatively darker (L*=73.1; measured on HunterLab ColorQuest XE in RSIN mode, 50 mm cell) than the novel TiO₂ containing biolatex conjugates prepared by co-extrusion of the equivalent amount of the same titanium dioxide product (L*=75.9; measured on HunterLab ColorQuest XE in RSIN mode, 50 mm cell). Upon one week of aging, the post-blended sample showed significant settling and the formation of a liquid syneresis layer on the surface of the sample, whereas sample 4 was stable and showed no settling. This example illustrates the fundamental difference between the novel biolatex conjugates prepared by co-extrusion with TiO₂ particles which has significantly enhanced performance, and a physical mixture of biopolymer nanoparticles with TiO₂ particles which does not have enhanced performance over the pure biopolymer nanoparticles.

**TABLE A**

| Example No. | 1 | 2 | 3 | 4 | 5 | 6 | 7 | 8 | 9 | 10 |
|---|---|---|---|---|---|---|---|---|---|---|
| Screw Used (See Fig. 3) | 58-1 | 92-1 | 92-1 | 92-2 | 92-2 | 92-3 | 92-6 | 92-6 | 92-6 | 92-6 |
| Formulation (Parts per 100 Dry Starch) | | | | | | | | | | |
| Glycerol | 10.0 | 10.0 | 10.0 | 10.0 | 10.0 | 10.0 | 10.7 | 9.9 | 9.6 | None |
| Glyoxal | 2.0 | 2.0 | 2.0 | 1.9 | 1.9 | 1.9 | 2.0 | 2.0 | 2.0 | 2.0 |
| Upstream Water | 0.0 | 1.1 | 1.0 | 1.2 | 1.2 | 1.2 | 0.8 | 11.4 | 11.8 | 0.8 |
| Water with Glyoxal | 3.0 | 6.0 | 5.1 | 6.1 | 6.3 | 6.3 | 3.1 | 3.1 | 3.0 | 3.1 |
| Post Reaction Water | NA | NA | NA | NA | NA | NA | 9.0 | 0.0 | 0.0 | 9.0 |
| Glycerol Addition | Brl 2 | PreBlend | PreBlend | PreBlend | PreBlend | PreBlend | Brl 1 | Brl 1 | Brl 1 | None |
| | | | | | | | | | | |
| Rate (kg/hr) Active Feed | 178 | 698 | 698 | 410 | 410 | 410 | 617 | 617 | 1117 | 562 |
| Extruder rpm | 564 | 500 | 523 | 303 | 398 | 398 | 310 | 303 | 543 | 303 |
| Specific Rate ((kg/hr)/rpm) | 0.316 | 1.40 | 1.34 | 1.35 | 1.03 | 1.03 | 1.99 | 2.04 | 2.06 | 1.85 |
| SME (J/g) | 1172 | 794 | 886 | 846 | 1040 | 1075 | 1053 | 944 | 863 | NA |
| Run Time re Steam | No Limit | ∼15 mins. | 22 mins. | | 40 mins. | 15 mins. | No Limit | No Limit | No Limit | |
| Dispersion Viscosity [mPa.s] | 125 | 147 | 156 | 113 | 101 | No Sample | 123 | 200 | 176 | No Sample |

**TABLE B**

| **Barrel Temperature Profiles** | | | | | | | | | | |
|---|---|---|---|---|---|---|---|---|---|---|
| Example No. | 1 | 2 | 3 | 4 | 5 | 6 | 7 | 8 | 9 | 10 |
| Screw Used (See Fig 3) | 58-1 | 92-1 | 92-1 | 92-2 | 92-2 | 92-3 | 92-6 | 92-6 | 92-6 | 92-6 |
| Temperature Set Points (°C) | | | | | | | | | | |
| Barrel 1 | ← Full Cooling → | | | | | | | | | |
| Barrel 2 | 50 | 10 | 10 | 10 | 10 | 10 | 10 | 10 | 10 | 10 |
| Barrel 3 | 120 | 10 | 10 | 10 | 10 | 10 | 10 | 10 | 10 | 10 |
| Barrel 4 | 120 | 71 | 71 | 49 | 49 | 49 | 49 | 49 | 49 | 49 |
| Barrel 5 | 140 | 121 | 121 | 121 | 121 | 49 | 121 | 121 | 121 | 121 |
| Barrel 6 | 180 | 121 | 121 | 121 | 121 | 121 | 121 | 121 | 121 | 121 |
| Barrel 7 | 180 | 121 | 121 | 121 | 121 | 121 | 121 | 121 | 121 | 121 |
| Barrel 8 | 180 | 121 | 121 | 121 | 121 | 121 | 121 | 121 | 121 | 121 |
| Barrel 9 | | 160 | 160 | 160 | 160 | 160 | 121 | 121 | 121 | 121 |
| Barrel 10 | | | | | | | 93 | 93 | 93 | 93 |
| Barrel 11 | | | | | | | 93 | 93 | 93 | 93 |
| Die | 180 | 124 | 124 | 149 | 149 | 149 | 149 | 149 | 149 | 149 |

**TABLE C**

| **Paper Coating Formulations** | | | | | | | | | | |
|---|---|---|---|---|---|---|---|---|---|---|
| **Formulas are in dry parts per hundred** | | | | | | | | | | |
| **Material** | **Lot No.** | **TiO₂ type** | **% TiO₂** | **Order of Addition** | **Material Solids** | **Trial 1** | **Trial 2** | **Trial 3** | **Trial 4** | **Trial 5** |
| | | | | | | | | | | |
| **Clay** | | | | **1** | **70%** | **34** | **34** | **34** | **34** | **34** |
| **GCC** | | | | **2** | **72%** | **64** | **64** | **64** | **64** | **64** |
| **TiO₂** | | | | **3** | **72%** | **2.000** | **2.051** | **2.000** | **2.000** | **2.000** |
| | | | | | | | | | | |
| **SB Latex** | | | | **6** | **50%** | **8.5** | **8.5** | **8.5** | **8.5** | **8.5** |
| **ECOSPHERE® 2202** | **A216208J** | | **0.00** | **8** | **92%** | **5.1** | | | | |
| **ECOSPHERE® 2202** | **A216208J** | | **0.00** | **8** | **92%** | | **5.1** | | | |
| **ECOSPHERE® 92238** | **A2080508E-T2** | **R101** | **0.99** | **8** | **92%** | | | **5.1** | | |
| **ECOSPHERE® 92240** | **A2080508E-T4** | **R900** | **0.99** | **8** | **92%** | | | | **5.1** | |
| **ECOSPHERE® 92241** | **BU-7388-20A** | **R900** | **3.10** | **8** | **92%** | | | | | **5.1** |
| **SB Latex replacement level with ECOSPHERE® biotex™:** | | | | | | **37.5%** | **37.5%** | **37.5%** | **37.5%** | **37.5%** |
| | | | | | | | | | | |
| **Dispersant** | | | | **5** | **30%** | **0.6** | **0.6** | **0.6** | **0.6** | **0.6** |
| **Optical Brightener (OBA)** | | | | **9** | **100%** | **0.9** | **0.9** | **0.9** | **0.9** | **0.9** |
| **Thickener** | | | | **10** | **25%** | **0** | **0** | **0** | **0** | **0** |
| **Glyoxal insolubilizer** | | | | **11** | **55%** | **0.4** | **0.4** | **0.4** | **0.4** | **0.4** |
| | | | | | | | | | | |
| **Percent Solids** | | | | | | **63%** | **63%** | **63%** | **63%** | **63%** |
| **Final pH** | | | | | | **8.0 - 8.5** | **8.0 - 8.5** | **8.0 - 8.5** | **8.0 - 8.5** | **8.0 - 8.5** |
| **pH Adjustment** | | | | **7,12** | | **19%NH₄OH** | **19% NH₄OH** | **19% NH₄OH** | **19% NH₄OH** | **19% NH₄OH** |
| **Coat Weight Target (#/3300 ft²)** | | | | | | **8.5 - 9.5** | **8.5 - 9.5** | **8.5 - 9.5** | **8.5 - 9.5** | **8.5 - 9.5** |
| **Coat Weight Target (gsm)** | | | | | | **12.7 to 14.3** | **12.7 to 14.4** | **12.7 to 14.5** | **12.7 to 14.6** | **12.7 to 14.7** |
| **Gloss Target** | | | | | | **72** | **72** | **72** | **72** | **72** |
| | | | | | | | | | | |
| **Water addition to reach target solids** | | | | **4** | **0%** | | | | | |

**TABLE D**

| **Solids, Viscosity and pH for the Paper Coating Formulations and Coat Weight Results for Paper Coated on the CLC Coater** | | | | | | | |
|---|---|---|---|---|---|---|---|
| **Trial** | **Final** | **pH** | **Brookfield Viscosity (cps) (100 rpm, Spindle No. 5)** | | **Hercules Viscosity (cps)** | **Coat Wt.** | **Coat Wt.** |
| | **% Solids** | | **cps** | **°C** | **(6600 rpm)** | **(lb/3300 ft²)** | **(gsm)** |
| **1** | **62.87** | **8.60** | **840** | **23.0** | **50.0** | **8.7** | **13.1** |
| **2** | **62.98** | **8.50** | **750** | **24.0** | **42.5** | **9.4** | **14.1** |
| **3** | **62.84** | **8.23** | **700** | **23.0** | **38.6** | **8.8** | **13.3** |
| **4** | **62.65** | **8.30** | **720** | **24.0** | **37.7** | **9.3** | **14.0** |
| **5** | **62.76** | **8.23** | **650** | **24.0** | **43.6** | **8.6** | **12.9** |

Therefore, it can be seen that the present invention provides novel biolatex conjugate compositions and methods of production and use thereof.

Although the invention has been described in considerable detail with reference to certain embodiments, one skilled in the art will appreciate that the present invention can be practiced by other than the described embodiments, which have been presented for purposes of illustration and not of limitation. For example, it is possible to achieve the same unit operation described herein with different element configurations and different brands and models of twin screw extruders. Therefore, the scope of the appended claims should not be limited to the description of the embodiments contained herein.

## Claims

1. A process for producing a biolatex conjugate composition, the process comprising:
feeding biopolymer feedstock, at least one plasticizer and at least one additive to a feed zone of an extruder having a screw configuration such that the biopolymer feedstock, the at least one plasticizer and the at least one additive are processed under shear forces in the extruder to form a biopolymer-additive complex; and
adding a crosslinking agent to the biopolymer-additive complex,
thereby producing a biolatex conjugate composition.

2. The process of claim 1 wherein the at least one additive is selected from the group consisting of titanium dioxide, aluminum oxide, aluminum trihydrate, sodium aluminum phosphate, aluminum phosphate, sodium aluminum magnesium silicate, fly ash, zeolite, sodium aluminum silicate, talc, clay, delaminated clay, calcined kaolin clay, montmorillonite clay, nanoclay, silica particles, zinc oxide, calcium carbonate, optical brightening agents, biocides, stabilizers, and combinations thereof.

3. The process of claim 1 wherein the at least one additive comprises titanium dioxide.

4. The process of claim 3 wherein the titanium dioxide is a hydrophilic-or hydrophobically-modified particulate product.

5. The process of claim 3 wherein the titanium dioxide has an average particle size of less than about 1.0 micron.

6. The process of claim 1 wherein the biopolymer feedstock, the at least one additive, and the at least one plasticizer are added separately to the feed zone of the extruder.

7. The process of any of claims 1 to 6 wherein the at least one plasticizer is selected from the group consisting of water, alcohols, glycerol, ethylene glycol, propylene glycol, polyglycols, sugar alcohols, urea, citric acid, citric acid esters, and mixtures thereof, and wherein the crosslinking agent is selected from the group consisting of dialdehydes, polyaldehydes, acid anhydrides, mixed anhydrides, glutaraldehyde, glyoxal, oxidized carbohydrates, periodate-oxidized carbohydrates, epichlorohydrin, epoxides, triphosphates, petroleum-based monomeric, oligomeric and polymeric crosslinkers, biopolymer crosslinkers, and divinyl sulphone.

8. The process of any of claims 1 to 7 wherein the biopolymer feedstock is selected from the group consisting of carbohydrate, starch and protein.

9. The process of any of claims 1 to 8 wherein the at least one additive is fed to the extruder at a weight percentage from about 0.1% to about 10% by weight based on weight of the composition.

10. The process of any of claims 1 to 9 wherein the biopolymer portion of the biopolymer-additive complex has an average particle size of less than about 400 nanometers.

11. A biolatex conjugate composition obtainable by the process of any of claims 1 to 10.

12. A biolatex conjugate composition comprising a biopolymer-additive complex reacted with a crosslinking agent wherein the at least one additive is selected from the group consisting of titanium dioxide, aluminum oxide, aluminum trihydrate, sodium aluminum phosphate, aluminum phosphate, sodium aluminum magnesium silicate, fly ash, zeolite, sodium aluminum silicate, talc, clay, delaminated clay, calcined kaolin clay, montmorillonite clay, nanoclay, silica particles, zinc oxide, calcium carbonate, optical brightening agents, biocides, stabilizers, and combinations thereof.

13. The composition according to any one of claims 11-12 wherein the at least one additive comprises titanium dioxide.

14. The composition of claim 13 wherein the titanium dioxide has an average particle size of less than about 1.0 micron.

15. The composition of any of claims 11 to 14 wherein the at least one additive comprises anatase titanium dioxide.

16. The composition according to any one of claims 11-15 wherein the at least one additive comprises an optical brightening agent.

17. The composition of any of claims 11 to 16 wherein the at least one additive is present in the composition at a weight percentage from about 0.1% to about 10% by weight based on weight of the composition.

18. The composition of any of claims 11 to 17 wherein the biopolymer portion of the biopolymer-additive complex has an average particle size of less than 400 nanometers.

19. The composition of any of claims 11 to 18 wherein the biopolymer is selected from the group consisting of carbohydrate, starch and protein.

20. A coating formulation for paper comprising the biolatex conjugate composition according to any one of claims 11-19.

21. Use of a biolatex conjugate composition according to any one of claims 11-19, for replacing all or part of a petroleum-based binder in a paper coating formulation.

## Patentansprüche

1. Verfahren zum Herstellen einer Biolatexkonjugat-Zusammensetzung, das Verfahren umfasst:
Beschicken einer Zuführzone eines Extruders mit einer Schneckenkonfiguration mit dem Biopolymer-Ausgangsmaterial, mindestens einem Weichmacher und mindestens einem Zusatzstoff, sodass das Biopolymer-Ausgangsmaterial, der mindestens eine Weichmacher und der mindestens eine Zusatzstoff unter Scherkräften in dem Extruder verarbeitet werden, um einen Biopolymer-Zusatzstoff-Komplex zu bilden; und
Hinzufügen eines Vernetzungsmittels zu dem Biopolymer-Zusatzstoff-Komplex, wodurch eine Biolatexkonjugat-Zusammensetzung hergestellt wird.

2. Verfahren nach Anspruch 1, wobei der mindestens eine Zusatzstoff ausgewählt ist aus der Gruppe bestehend aus Titandioxid, Aluminiumoxid, Aluminiumtrihydrat, Natriumaluminiumphosphat, Aluminiumphosphat, Natriumaluminiummagnesiumsilikat, Flugasche, Zeolith, Natriumaluminiumsilikat, Talkum, Ton, delaminiertem Ton, kalziniertem Kaolin-Ton, Montmorillonit-Ton, Nano-Ton, Silikapartikeln, Zinkoxid, Calciumcarbonat, optischen Aufhellern, Bioziden, Stabilisatoren und Kombinationen davon.

3. Verfahren nach Anspruch 1, wobei der mindestens eine Zusatzstoff Titandioxid umfasst.

4. Verfahren nach Anspruch 3, wobei das Titandioxid ein hydrophil- oder hydrophobmodifiziertes partikelförmiges Produkt ist

5. Verfahren nach Anspruch 3, wobei das Titandioxid eine mittlere Partikelgröße von weniger als etwa 1,0 Mikrometer aufweist.

6. Verfahren nach Anspruch 1, wobei das Biopolymer-Ausgangsmaterial, der mindestens eine Zusatzstoff und der mindestens eine Weichmacher getrennt der Zuführzone des Extruders zugeführt werden.

7. Verfahren nach einem der Ansprüche 1 bis 6, wobei der mindestens eine Weichmacher ausgewählt ist aus der Gruppe bestehend aus Wasser, Alkoholen, Glycerin, Ethylenglycol, Propylenglykol, Polyglykolen, Zuckeralkoholen, Harnstoff, Zitronensäure, Zitronensäureestern und Mischungen davon, und wobei das Vernetzungsmittel ausgewählt ist aus der Gruppe bestehend aus Dialdehyden, Polyaldehyden, Säureanhydriden, gemischten Anhydriden, Glutaraldehyd, Glyoxal, oxidierten Kohlenhydraten, Periodat-oxidierten Kohlenhydraten, Epichlorhydrin, Epoxiden, Triphosphaten, Mineralöl-basierten monomeren, oligomeren und polymeren Vernetzern, Biopolymervernetzern und Divinylsulfon.

8. Verfahren nach einem der Ansprüche 1 bis 7, wobei das Biopolymer-Ausgangsmaterial ausgewählt ist aus der Gruppe bestehend aus Kohlenhydrat, Stärke und Protein.

9. Verfahren nach einem der Ansprüche 1 bis 8, wobei der mindestens eine Zusatzstoff dem Extruder in einem Gewichtsanteil von etwa 0,1 Gew.-% bis etwa 10 Gew.-%, bezogen auf das Gewicht der Zusammensetzung zugefügt wird.

10. Verfahren nach einem der Ansprüche 1 bis 9, wobei der Biopolymerteil des Biopolymer-Zusatzstoff-Komplexes eine durchschnittliche Partikelgröße von weniger als etwa 400 Nanometer aufweist.

11. Biolatexkonjugat-Zusammensetzung, welche durch das Verfahren nach einem der Ansprüche 1 bis 10 erhältlich ist.

12. Biolatexkonjugat-Zusammensetzung, welche ein Biopolymer-Zusatzstoff-Komplex, umgesetzt mit einem Vernetzungsmittel, umfasst, wobei der mindestens eine Zusatzstoff ausgewählt ist aus der Gruppe bestehend aus Titandioxid, Aluminiumoxid, Aluminiumtrihydrat, Natriumaluminiumphosphat, Aluminiumphosphat, Natriumaluminiummagnesiumsilikat, Flugasche, Zeolith, Natriumaluminiumsilikat, Talkum, Ton, delaminiertem Ton, kalziniertem Kaolin-Ton, Montmorillonit-Ton, Nano-Ton, Silikapartikeln, Zinkoxid, Calciumcarbonat, optischen Aufhellern, Bioziden, Stabilisatoren und Kombinationen davon.

13. Zusammensetzung gemäß einem der Ansprüche 11-12, wobei der mindestens eine Zusatzstoff Titandioxid umfasst.

14. Zusammensetzung nach Anspruch 13, wobei das Titandioxid eine durchschnittliche Partikelgröße von weniger als etwa 1,0 Mikrometer aufweist.

15. Zusammensetzung nach einem der Ansprüche 11 bis 14, wobei der mindestens eine Zusatzstoff Anatas-Titandioxid umfasst.

16. Zusammensetzung gemäß einem der Ansprüche 11-15, wobei der mindestens eine Zusatzstoff einen optischen Aufheller umfasst.

17. Zusammensetzung nach einem der Ansprüche 11 bis 16, wobei der mindestens eine Zusatzstoff in der Zusammensetzung in einem Gewichtsanteil von etwa 0,1 Gew.-% bis etwa 10 Gew.-%, bezogen auf das Gewicht der Zusammensetzung vorliegt.

18. Zusammensetzung nach einem der Ansprüche 11 bis 17, wobei der Biopolymeranteil des Biopolymer-Zusatzstoff-Komplexes eine durchschnittliche Partikelgröße von weniger als 400 Nanometern aufweist.

19. Zusammensetzung nach einem der Ansprüche 11 bis 18, wobei das Biopolymer ausgewählt ist aus der Gruppe bestehend aus Kohlenhydrat, Stärke und Protein.

20. Beschichtungs-Formulierung für Papier, welche die Biolatexkonjugat-Zusammensetzung gemäß einem der Ansprüche 11-19 umfasst.

21. Verwendung einer Biolatexkonjugat-Zusammensetzung gemäß einem der Ansprüche 11-19, zum Ersetzen des gesamten oder eines Teils des Mineralöl-basierten Binders in einer Papierbeschichtungs-Formulierung.

## Revendications

1. Procédé de production d'une composition conjuguée de biolatex, le procédé comprenant :
l'acheminement d'une charge d'alimentation biopolymère, d'au moins un plastifiant et d'au moins un additif à une zone d'alimentation d'une extrudeuse ayant une configuration à vis de sorte que la charge d'alimentation biopolymère, le au moins un plastifiant et le au moins un additif soient soumis à des forces de cisaillement dans l'extrudeuse afin de former un complexe de biopolymère-additif ; et
l'addition d'un agent de réticulation au complexe de biopolymère-additif en sorte de produire une composition conjuguée de biolatex.

2. Procédé selon la revendication 1, dans lequel le au moins un additif est choisi dans le groupe constitué du dioxyde de titane, de l'oxyde d'aluminium, du trihydrate d'aluminium, de phosphate de sodium aluminium, du phosphate d'aluminium, du silicate de sodium aluminium magnésium, de cendres volantes, d'une zéolite, du silicate de sodium aluminium, du talc, de l'argile, de l'argile délaminée, de l'argile de kaolin calcinée, de l'argile montmorillonite, d'une nano-argile, des particules de silice, de l'oxyde de zinc, du carbonate de calcium, d'azureur optique, des biocides, des stabilisants et de leurs combinaisons.

3. Procédé selon la revendication 1, dans lequel le au moins un additif comprend du dioxyde de titane.

4. Procédé selon la revendication 3, dans lequel le dioxyde de titane est un produit particulaire modifié au plan hydrophile ou hydrophobe.

5. Procédé selon la revendication 3, dans lequel le dioxyde de titane a une taille particulaire moyenne de moins d'environ 1,0 micromètre.

6. Procédé selon la revendication 1, dans lequel la charge d'alimentation biopolymère, le au moins un additif et le au moins un plastifiant sont ajoutés séparément à la zone d'alimentation de l'extrudeuse.

7. Procédé selon l'une quelconque des revendications 1 à 6, dans lequel le au moins un plastifiant est choisi dans le groupe constitué de l'eau, des alcools, du glycérol, de l'éthylèneglycol, du propylèneglycol, des polyglycols, des alcools de sucre, de l'urée, de l'acide citrique, des esters d'acide citrique et de leurs mélanges et dans lequel l'agent de réticulation est choisi dans le groupe constitué des dialdéhydes, des polyaldéhydes, des anhydrides d'acides, des anhydrides mixtes, du glutaraldéhyde, de glyoxal, des hydrates de carbone oxydés, des hydrates de carbone oxydés par un periodate, de l'épichlorohydrine, des époxydes, des triphosphates, des agents de réticulation monomères, oligomères et polymères à base de pétrole, des agents de réticulation biopolymères et de la divinylsulfone.

8. Procédé selon l'une quelconque des revendications 1 à 7, dans lequel la charge d'alimentation biopolymère est choisie dans le groupe constitué d'un hydrate de carbone, d'amidon et de protéine.

9. Procédé selon l'une quelconque des revendications 1 à 8, dans lequel le au moins un additif est acheminé à l'extrudeuse dans un pourcentage pondéral d'environ 0,1 à environ 10 % en poids sur la base du poids de la composition.

10. Procédé selon l'une quelconque des revendications 1 à 9, dans lequel la partie biopolymère du complexe d'additif biopolymère a une taille particulaire moyenne inférieure à environ 400 nanomètres.

11. Composition conjuguée de biolatex obtenable par le procédé selon l'une quelconque des revendications 1 à 10.

12. Composition conjuguée de biolatex comprenant un complexe de biopolymère-additif qui a réagi avec un agent de réticulation, dans lequel le au moins un additif est choisi dans le groupe constitué du dioxyde de titane, de l'oxyde d'aluminium, du trihydrate d'aluminium, du phosphate de sodium aluminium, du phosphate d'aluminium, du silicate de sodium aluminium magnésium, de cendres volantes, d'une zéolite, du silicate de sodium aluminium, du talc, de l'argile, de l'argile délaminée, de l'argile de kaolin calcinée, de l'argile montmorillonite, de la nano-argile, des particules de silice, de l'oxyde de zinc, du carbonate de calcium, d'agents d'avivage optique, des biocides, des stabilisants et de leurs combinaisons.

13. Composition selon l'une quelconque des revendications 11 et 12, dans laquelle le au moins un additif comprend du dioxyde de titane.

14. Composition selon la revendication 13, dans laquelle le dioxyde de titane a une taille particulaire moyenne de moins d'environ 1,0 micromètre.

15. Composition selon l'une quelconque des revendications 11 à 14, dans laquelle le au moins un additif comprend du dioxyde d'anatase titane.

16. Composition selon l'une quelconque des revendications 11 à 15, dans laquelle le au moins un additif comprend un azureur optique.

17. Composition selon l'une quelconque des revendications 11 à 16, dans laquelle le au moins un additif est présent dans la composition en pourcentage pondéral d'environ 0,1 % à environ 10 % en poids sur la base du poids de la composition.

18. Composition selon l'une quelconque des revendications 11 à 17, dans laquelle la partie biopolymère du complexe de biopolymère-additif a une taille particulaire moyenne inférieure à 400 nanomètres.

19. Composition selon l'une quelconque des revendications 11 à 18, dans laquelle le biopolymère est choisi dans le groupe constitué d'un hydrate de carbone, d'amidon et de protéine.

20. Formulation de revêtement pour papier comprenant la composition conjuguée de biolatex selon l'une quelconque des revendications 11 à 19.

21. Utilisation d'une composition conjuguée de biolatex selon l'une quelconque des revendications 11 à 19 pour remplacer tout ou partie d'un liant à base de pétrole dans une formulation de revêtement de papier.
